# EUROPEAN PATENT SPECIFICATION

(11) **EP 3 436 339 B1**
(45) Date of publication and mention of the grant of the patent: **24.02.2021**
(21) Application number: 17714457.3
(22) Date of filing: 30.03.2017
(51) Int. Cl.: B63B 35/66, B63B 35/00

(54) **A METHOD AND SYSTEM FOR OPERATING ONE OR MORE TUGBOATS**
VERFAHREN UND SYSTEM FÜR DEN BETRIEB EINER ODER MEHRERER SCHLEPPSCHIFFE
PROCÉDÉ ET SYSTÈME POUR FAIRE FONCTIONNER UN OU PLUSIEURS REMORQUEURS

(30) Priority: 31.03.2016 DK 201670186
(43) Date of publication of application: 06.02.2019
(73) Proprietor: A.P. Møller - Mærsk A/S, 1263 Copenhagen K (DK)
(72) Inventor: BANGSLUND, Thomas, 3650 Ølstykke (DK); HANSEN, Rasmus Kobberø, 4390 Vipperød (DK)
(74) Representative: EIP
(86) International application number: PCT/EP2017/057556
(87) International publication number: WO 2017/167884

(56) References cited:
- WO-A1-2016/023080
- KR-A- 20110 059 206
- KR-A- 20160 034 642
- KR-B1- 100 702 448
- US-B1- 6 269 763

## Description

### TECHNICAL FIELD

The disclosure relates to, a method and to a system for operating one or more tugboats, in particular remote-controlled tugboats, such as e.g. an unmanned remote-controlled and optionally partially autonomously operating tugboats.

### BACKGROUND

Assist operations, for e.g. assisting a marine vessel, such as e.g. a cargo vessel into port, to berth, from berth and out of port are conventionally carried out by manned tugboats that are operated by a captain assisted by a number of other crew members such as able seamen between zero and eight. Marine vessels need this assistance since they can typically not maneuver by themselves in the constraints of a port environment. The one or more tugboats are used to tow the marine vessel using a towing line that connects a winch on the tugboat to a capstan or bollard on the marine vessel. The connection point on the marine vessel can be near the stern or near the bow, but also anywhere there between. The one or more tugboats can also be used to push the marine vessel when needed. Hereto, the bow of the tugboat engages a strong point (push point) on the hull of the marine vessel to be assisted (hereafter referred to as "assisted vessel"). The strong points on the hull are generally marked with large letters TUG in order to allow the crew of the tugboat to identify the position of the strong point.

In general, a tugboat is a boat that operates in water spaces, harbors, bays, navigable channels, lakes and rivers, and the purpose of a tugboat is to transfer mechanical energy from the tugboat to the marine vessel to be towed/assisted, through its engine and its propulsors. Tugboats are adapted to their task by the provision of powerful diesel electric or diesel drives and have an extremely high power to tonnage ratio in order to be able to provide a large pulling/pushing force (bollard pull).

A tugboat's power is typically stated by its engine's horsepower and its overall bollard pull. The largest commercial harbor tugboats in the 2000s-2010s, used for towing container ships or similar, had around 60-65 tons of bollard pull, which is considered as 15 tons above "normal" tugboats.

Tugboats are highly maneuverable, and various propulsion systems have been developed to increase maneuverability and safety. Most tugboats are propeller-driven. Kort nozzles have been added to increase thrust per kW/hp. Nozzle-rudders omit the need for a conventional rudder. Tugboats are typically provided with a so-called Z-drive or (azimuth thruster) which is a pod that can rotate 360° allowing for rapid changes in the thrust direction.

In addition or as an alternative tugboats have been provided with a Voith-Schneider propeller (VSP), also known as a cycloidal drive which is a specialized marine propulsion system. The VSP is highly maneuverable, being able to change the direction of its thrust almost instantaneously. It is widely used on tugboats. From a circular plate, rotating around a vertical axis, a circular array of vertical blades (in the shape of hydrofoils) protrude out of the bottom of the boat. Each blade can rotate itself around a vertical axis. The internal gear changes the angle of attack of the blades in sync with the rotation of the plate, so that each blade can provide thrust in any direction, very similar to the collective pitch control and cyclic in a helicopter.

Operational costs for tugboat operations i.e. vessel assist operations consist for a maj or part of expenses to crew. There is therefore a desire to reduce the expenses for operating tugboats.

KR2016/0034642 discloses an unmanned tugging system in which a ship is moved through wireless remote control of tugboats. A real-time position of the tugboats is transmitted to a remote control controller, and the remote control controller remotely controls the tugboats by wirelessly communicating with the tugboats

Document US 6 269 763 discloses an autonomous marine vehicle used for pulling or pushing boats.

### SUMMARY

It is an object of the invention to provide system that overcomes or at least reduces the problems indicated above.

The foregoing and other objects are achieved by the features of the independent claims. Further implementation forms are apparent from the dependent claims, the description and the figures.

According to a first aspect, there is provided a remote-controlled tugboat for assisting a marine vessel to maneuver, the tugboat comprising:
a towing line attached to the tugboat at one end and attachable to the marine vessel at another end;
a towing line force sensor; and
a control unit having a transmitter-receiver configured to wirelessly receive pilot-control thrust commands transmitted from at least one of a land-based control center and a mobile remote controller unit, said pilot-control thrust commands being for assisting the marine vessel to maneuver in dependence on sensor data from the towing line force sensor,
wherein the control unit is configured to command the tugboat based on the pilot-control thrust commands and said tugboat is configured to execute said pilot-control thrust commands to assist said marine vessel with a required tension on the towing line.

In a first possible implementation form of the first aspect, the remote-controlled tugboat comprises at least one of:
a positioning system, the tugboat being configured to transmit its position as determined by said positioning system wirelessly to said land-based control center;
a navigation system configured to sail said tugboat from a present position to a target position received from said land-based control center;
a controller configured to berth said tugboat autonomously, said controller being configured to accurately react to a near environment of the tugboat to avoid overloading of a berth or hull of the tugboat; and
a crane or robot arm, and a controller for controlling said crane or robot arm, said controller being configured to wirelessly receive instructions from said land-based control center for operating said crane or robot arm.

In a second possible implementation form of the first aspect, the remote-controlled tugboat is configured to follow the marine vessel at a substantially constant distance, preferably with a fixed relative position to the marine vessel, upon receipt of instructions from said mobile remote controller unit or from said land-based control center.

In a third possible implementation form of the first aspect, the remote-controlled tugboat is configured to execute said pilot-control thrust commands as vectors in relation to a hull of the marine vessel.

According to a second aspect, there is provided a land-based control center for controlling at least one tugboat, the tugboat comprising: a towing line attached to the tugboat at one end and attachable to a marine vessel at another end; and a towing line force sensor, the tugboat being suitable for assisting the marine vessel to maneuver, said land-based control center comprising:
a transmitter-receiver configured for wirelessly transmitting pilot-control thrust instructions to said at least one tugboat for assisting the marine vessel to maneuver in dependence on sensor data from the towing line force sensor, the pilot-control thrust instructions being received in a control unit of the at least one tugboat, the pilot-control thrust commands being configured to wirelessly control said tugboat with a required tension in the towing line, and said pilot-control thrust commands comprising a vector in relation to a hull of the marine vessel.

By providing a control center for controlling at least one remote controlled tugboat the tugboat can be operated from a control center and the number of crew members needed on the tugboat can be reduced.

In a first possible implementation form of the second aspect, the vector determines a magnitude of the thrust to be applied to the hull of the marine vessel and a direction of the thrust to be applied relative to the hull of the marine vessel.

According to a third aspect, there is provided a system for assisting a marine vessel to maneuver, the system comprising:
a remote-controlled tugboat according to the first aspect; and
a land-based control center according to the second aspect;
wherein the transmitter-receiver of the control unit of the remote-controlled tugboat is configured to wirelessly receive pilot-control thrust commands transmitted from the land-based control center.

In a first possible implementation form of the third aspect, the land-based control center is configured to wirelessly remote-control the tugboat to sail to a particular position for assisting the marine vessel to maneuver.

In a second possible implementation form of the third aspect, the tugboat is provided with:
an optical sensor arrangement or digital camera arrangement; and
a transmitter for wirelessly transmitting a signal of said optical sensor arrangement or digital camera arrangement to the land-based control center;
wherein the land-based control center is provided with:
a receiver for receiving the signal; and
display screens for displaying the signal, preferably in real-time and even more preferably in real-time and on a 360° circular array of display screens, to a human operator.

In a third possible implementation form of the third aspect, the tugboat is provided with:
an acoustic sensor arrangement, preferably a directional acoustic sensor arrangement with a 360° field of hearing in the horizontal plane; and
a transmitter for wirelessly transmitting the signal of said acoustic sensor arrangement to the land-based control center;
wherein the land-based control center is provided with:
a receiver for receiving the signal from said acoustic sensor arrangement; and
transducers for reproducing the signal, preferably real-time and even more preferably real-time and spatially, at the land-based control center.

In a fourth possible implementation form of the third aspect, the system further comprises the mobile remote controller unit for remotely controlling the remote-controlled tugboat, wherein the transmitter-receiver of the controller of the remote-controlled tugboat is configured to wirelessly receive pilot-control thrust commands transmitted from the mobile remote controller unit.

According to a fourth aspect, there is provided a method for controlling at least one tugboat for assisting a marine vessel to maneuver, from a remotely located control center, the method comprising:
providing at least one tugboat comprising: a towing line attached to the tugboat at one end and attachable to the marine vessel at another end; and a towing line force sensor;
providing a land-based control center located remotely from the at least one tugboat;
sending instructions wirelessly from the land-based control center to a given tugboat of the at least one tugboat for said given tugboat to sail to a particular position for assisting the marine vessel to maneuver;
receiving the instructions wirelessly on the given tugboat;
said given tugboat sailing to said particular position;
sending thrust commands, from said land-based control center or from a mobile remote controller unit in a vicinity of said particular position, to said given tugboat after the given tug boat has arrived at said particular position and in dependence on sensor data from the towing line force sensor; and
said given tugboat carrying out said thrust commands for assisting said marine vessel, with a required tension in the towing line, upon receipt of said thrust commands.

In a first possible implementation form of the fourth aspect, the thrust commands comprise a vector in relation to a hull of the marine vessel.

In a second possible implementation form of the fourth aspect, the method comprises operating, by a human pilot, said mobile remote controller unit to send the thrust commands therefrom, preferably whilst being located on said marine vessel.

In a third possible implementation form of the fourth aspect, the thrust commands are sent from the mobile remote controller unit, and control of the given tugboat passes from said land-based control center to said mobile remote controller unit when said given tugboat assists said marine vessel to maneuver.

In a fourth possible implementation form of the fourth aspect, the method further comprises the given tugboat autonomously sailing from its present position to the particular position, preferably including the given tugboat navigating autonomously from its present position to the particular position.

In a fifth possible implementation form of the fourth aspect, sending instructions wirelessly comprises sending instructions to the given tugboat to follow the marine vessel at a constant distance, preferably with no tension on the towing line.

In a sixth possible implementation form of the fourth aspect, the method further comprises: detecting optical and/or acoustical signals with one or more sensors on the given tugboat; and sending the optical and/or acoustical signals from the one or more sensors wirelessly to the land-based control center.

In a seventh possible implementation form of the fourth aspect, the method further comprises: sending instructions from the mobile remote controller unit, for example a portable remote control unit operated by a pilot on the marine vessel, to the given tugboat to deliver a free end of the towing line to a recipient on the marine vessel, particularly to a recipient at a particular position on the marine vessel; and the given tugboat delivering the free end of the towing line to the recipient.

In an eighth possible implementation form of the fourth aspect, the method further comprises: sending instructions from the mobile remote controller unit, for example a portable remote control unit operated by a pilot on the marine vessel, to the given tugboat to reel in the towing line; and the given tugboat reeling in the towing line.

In a ninth possible implementation form of the fourth aspect, the method further comprises sending instructions from the mobile remote controller unit, for example a portable remote control unit operated by a pilot on the marine vessel, for a thrust command with a given size and direction to the given tugboat applying thrust of an initial size and direction to the marine vessel in accordance with the thrust commands received from the land-based control center; and the given tugboat applying thrust with the given size and direction as instructed from the mobile remote controller unit.

These and other aspects of the invention will be apparent from and the embodiment(s) described below.

### BRIEF DESCRIPTION OF THE DRAWINGS

In the following detailed portion of the present disclosure, the invention will be explained in more detail with reference to the example embodiments shown in the drawings, in which:
Fig. 1 is a side view of an assisted vessel and a plurality of tugboats during an assist operation,
Fig. 2 is a top view of the assisted vessel and plurality of tugboats of Fig. 1 during an assist operation with one additional tugboat on the side of the assisted vessel,
Fig. 3 is a top view of the assisted vessel and a plurality of tugboats of Fig. 1 during an assist operation with two additional tugboats on the side of the assisted vessel,
Fig. 4 is a system diagram of a system with a remote control unit for a pilot, a remote control unit for a control center and a control unit for each tugboat in the system,
Fig. 5 is a side view of a tugboat with a crane arm in a rest position,
Fig. 6 is a side view of the tugboat of Fig. 5 in a lifted position holding a towing line,
Fig. 7 is a top view of the tugboat of Fig. 5 with the crane in a rest position,
Fig. 8 is a front view of tugboat of Fig. 5,
Fig. 9 is a top view of the tugboat of Fig. 5, with the crane in an active position for handing a towing line to a recipient,
Fig. 10 is a block diagram of the system for controlling the operation of the tugboat of Fig. 5,
Fig. 11 is a side view of a first embodiment of a grasping tool,
Fig. 12 is a view of another side of the grasping tool of Fig. 11,
Fig. 13 is a side view of a second embodiment of a grasping tool,
Fig. 14 is a view of another side of the grasping tool of Fig. 13,
Fig. 15 is a top view of a towing line with a hard spice eye,
Fig. 16 is a top view of a towing line with a soft splice eye,
Fig. 17 is a perspective view of a guide bitt with a support for the crane arm,
Figs. 18 to 25 are flowcharts illustrating methods for operating the tugboat of Fig. 5,
Fig. 26 is a block diagram of a control center,
Fig. 27 is a top view of the control center of Fig. 26,
Fig. 28 is a top view of a portable control unit for a pilot,
Fig. 29 is a block diagram of the portable control unit of Fig. 28,
Figs. 30 and 31 are screenshots of a touchscreen of the portable control unit of Fig. 28,
Fig. 32 is a top view of a boat with a crane in electrical connection with short, and
Figs. 33 is a chart illustrating collision avoidance.

### DETAILED DESCRIPTION

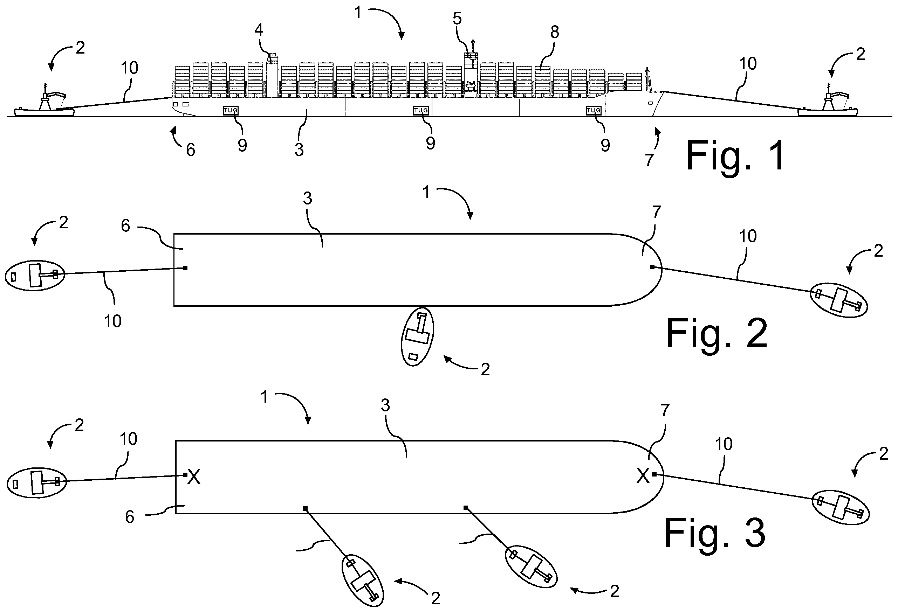

Fig. 1 is a side view of an assisted marine vessel 1 and a plurality of tugboats 2 during an assist operation. Fig. 2 is a top view of the assisted marine vessel 1, which could be the same marine vessel 1 or another marine vessel 1, with an additional tugboat pushing on the side of the assisted marine vessel 1. Fig. 3 is another top view of an assisted marine vessel 1 with two tugboats 2 pulling from the side of the assisted marine vessel 1. The number of tugboats 2 involved in an assist operation depends on the size of the assisted marine vessel 1, the capacity of the assisted marine vessel 1 to maneuver on its own account and on the pulling force (bollard pull) that can be delivered by the individual tugboats 2. Typically, a tugboat 2 will be able to deliver a bollard pull of at least 40 tons, preferably at least 50 tons and even more preferably at least 60 tons. The assisted marine vessel 1 can be any type of marine vessel 1 that needs assistance, such as e.g. a cargo ship, in Fig. 1 exemplified by a container ship. This example shows a container ship of the so-called twin island designed with funnels 4 for the exhaust gases closer to the stern 6 and a bridge 5 closer to the bow 7. Containers 8 are shown stowed above deck and will normally also be stowed below deck. The side of the hull 3 is provided with strong points 9 marked with the text "TUG" for indicating the position on the hull that is suitable to be engaged by a tugboat 2 pushing onto the hull 3.

The marine vessel 1 is provided with bollards and capstans at several positions along the side of the vessel for attachment of a towing line 10. Typically, bollards and capstans are provided near the stern 6 and near the bow 7 and at regular intervals along the sides of the hull 3. The towing lines 10 are attached at a suitable position on the marine vessel 1 in accordance with the actual needs. Thus, one end of the towing line 10 is attached to the marine vessel 1 and the other end of the towing line 10 is attached to a tugboat 2.

In an assist operation a pilot is on board of the assisted marine vessel 1 and the pilot is in charge of controlling the thrust actions of the tugboats 2. In a conventional set up the pilot will issue thrust commands via wireless radio communication to the captains of the respective tugboats.

The present embodiment relates though to tugboats 2 that are preferably unmanned and preferably partly remote controlled and preferably partly autonomously operating. The tugboats 2 are preferably capable of operating partially autonomously in response to (wireless) received instructions and partially under direct (wireless) remote control.

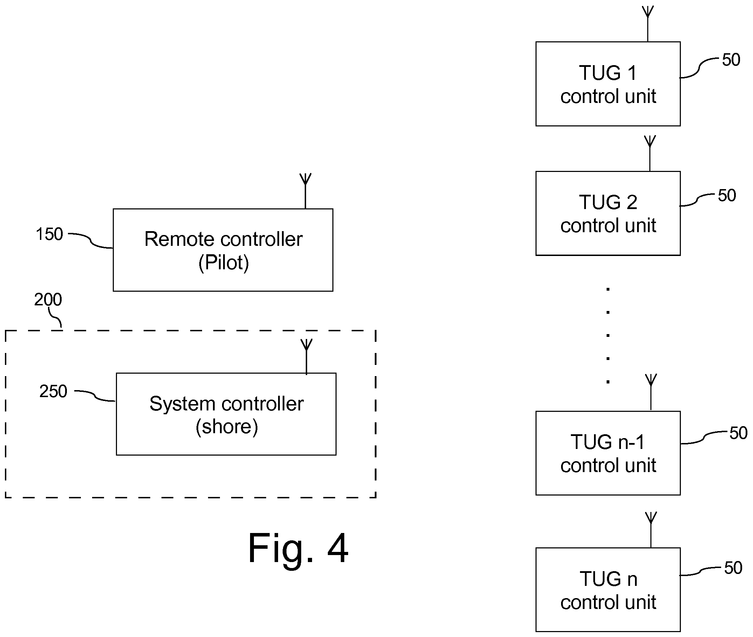

Fig. 4 is a system diagram that illustrates the system for controlling the tugboats 2. Each tugboat 2 is provided with an electronic control unit 50 that is provided with wireless communication means. The number of tugboats 2 involved can vary, as illustrated by the numbering 1....n. A system controller 250 with wireless communication means is provided at a control center 200 and a remote controller 150 with wireless communication means is provided to e.g. a pilot on an assisted marine vessel 1. The tugboats 2 operate autonomously, on the basis of programmed instructions, semi-autonomously on the basis of instructions from the system controller 250 at the control center 200, or in the direct remote control on the basis of instructions from the remote control unit 150 operated by the pilot. The system control unit or system controller 250 comprises a transmitter-receiver arrangement for transmitting and receiving information between the system controller 250 and the tugboat 2. Similarly the tugboat 2 comprises a reciprocal transmitter-receiver arrangement for send and receiving information to and from the system controller 250. The system control unit 250 is configured to send command instructions to the tugboat 1 to control movement thereof. In this way pilot command thrust instructions can be sent to the tugboat. At the same time information can be sent from the tugboat to the land-based control centre 200. For example real-time video images or other sensor data relating to the tugboat is sent back to the land-based control centre.

The system controller 250 will e.g. be located in a control center 200 on shore and will normally not be in visual contact with the tugboats 2. The system controller 250 is in control of a fleet or plurality of tugboats 2. The system controller 250 decides which tugboats 2 are sent into action and instructs the navigation of the tugboats 2 from berthing position to mobilized position and vice versa. The system controller 250 is therefore used to instruct the tugboat 2 to navigate to a particular position, and in an embodiment the tugboat 2 will navigate to the particular position autonomously after having received instructions thereto. When the tugboat 2 has arrived at mobilization position, the control of the tugboat 2 will be taken over by a pilot using the remote control unit 150. The remote control unit 150 is used to control the tugboats 2 while assisting a marine vessel 1 to maneuver. The remote control unit 150 is operated by the pilot and the pilot will typically be in visual contact with the tugboats 2 used to assist the marine vessel 1 to maneuver. Alternatively or additionally the system land-based control center 200 controls the tugboats throughout the whole operation. In this way one or more tug boats is remotely controlled from the system controller 250 located on the shore. Advantageously by keeping the pilot in the land-based control center 200, the pilot can be kept out of danger if the environmental conditions are treacherous.

The camera on the crane with its signal broadcasted to the remote control center 200 or to the remote control unit 150 allows an operator in the remote control center 200 or the pilot via the remote control unit 150.

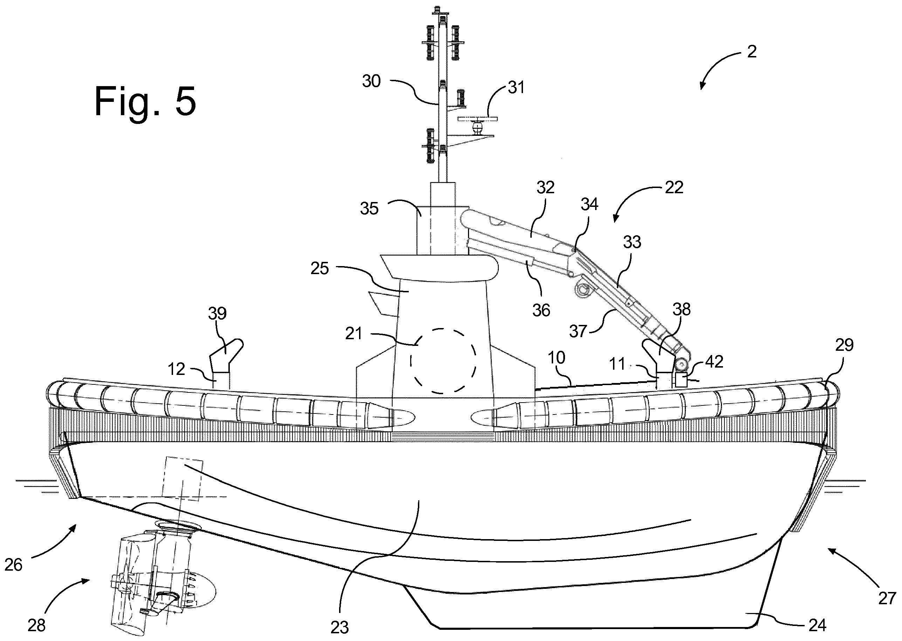

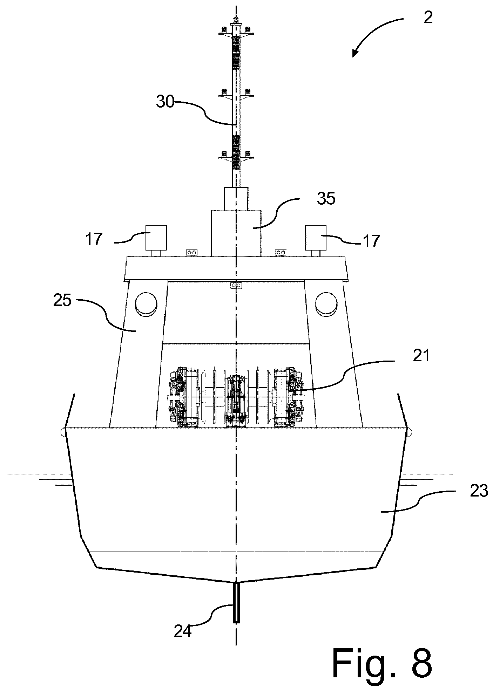

Figs. 5 to 9 show an example embodiment of a tugboat 2 that can be used for assisting the marine vessel 1 to maneuver. The tugboat 2 comprises a hull 23 that is provided with a skeg 24. The hull 23 extends from the stern 26 to the bow 27. The hull 23 is provided with a circumferential fender 29.

One or two propulsors in the form of one or two azimuth thrusters 28 (nozzle drives) are provided near the stern 26 (although other positions are possible) and provide thrust in any desired (horizontal) direction. The azimuth thrusters 28 are connected to internal combustion engines (diesel engine) or to diesel-electric drives or to electric drive motors for providing thrust, e.g. a bollard pull of at least 40 tons. Fuel tanks and/or electric batteries are also accommodated in the hull 23.

The tugboat 2 is provided with a superstructure 25 that houses a power winch 21; in this embodiment two power winches side-by-side on one shaft, and provides support for a radar mast 30 that is provided with a radar antenna 31 and other antennas for radio communication. The superstructure 25 also provides the support for a crane 22 and two LIDAR sensors 17.

The crane 22 is used to handle a towing line 10 that is at least partially reeled up to the power winch 21, i.e. to pick up the free end of the towing line 10 and to hand the towing line 10 to an able seaman or other crew member on the deck of the assisted vessel 1. Another task of the crane 22 is to handle a mooring rope and to handle the electrical connection to shore when the tugboat 2 is berthed.

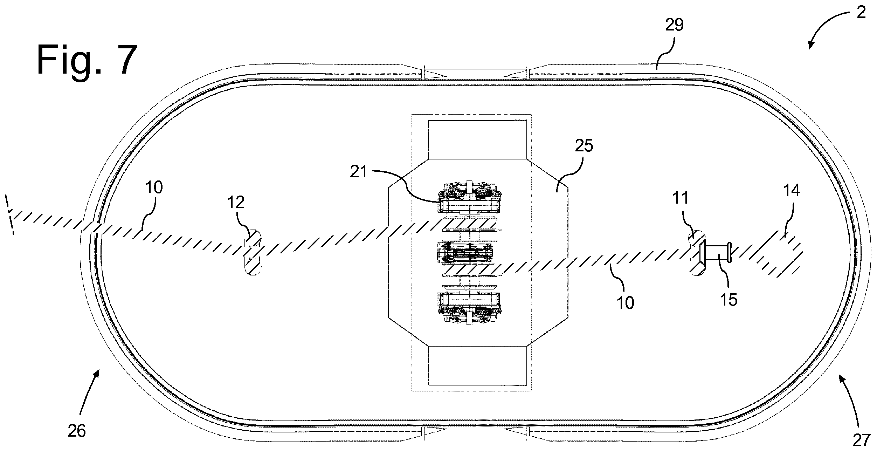

One towing line 10 extends from the power winch 21 to and through an aperture in a bitt 11 that is located forward of the superstructure 25. The power winch 21 is preferably a double winch and another towing line 10 (Fig. 7) can extend from the power winch 21 through an aperture in a bitt 12 that is located rearward of the superstructure 25.

The bitts 11 and 12 guide the towing lines 10 and ensure that the towing lines 10 has the right angle relative to the power winch 21 for correct reeling in and reading out of the towing lines 10. The free end of the towing line 10 is held by a grasping tool at the free end of the crane 22. A so-called painter 13 is attached to the free end of the towing line 10. The painter 13 is a light line that can be handled by the crew and be passed through a fairlead in the assisted marine vessel 1 to a capstan on the assisted marine vessel 1. The heavy towing line 10 can then be pulled up to the deck of the marine vessel 1 through the fairlead by activation of the capstan.

The superstructure 25 carries the radar mast 30 on which the radar antenna 31 is provided. The radar mast 30 is also provided with other antennas for radio communication purposes.

The superstructure 25 also serves as the support for a crane 22. In this embodiment the crane 22 is a knuckle boom crane, but any other suitable type of crane or robot arm could also be used. In an embodiment the crane arm is provided with a fire monitor (not shown) or at least provided with means for securing a fire monitor to the crane arm.

The crane 22, the power winch 21 and other equipment on the tugboat 2 can be hydraulically powered. Hereto, the tugboat 2 is provided with a hydraulic pump or pump station that provides pressurized hydraulic fluid for these consumers under control from the electronic control unit 50.

The crane 22 is pivotally suspended from the superstructure 25 around a vertical axis of the tugboat 2 by a preferably annular base member 35. The proximal end of the inner section 32 of the crane arm is hinged to the base member 35 and the distal end of the inner section 32 is hinged to the outer section 33 of the crane arm by a hinge 34. The outer section 33 of the crane arm is telescopic for increasing the reach of the crane.

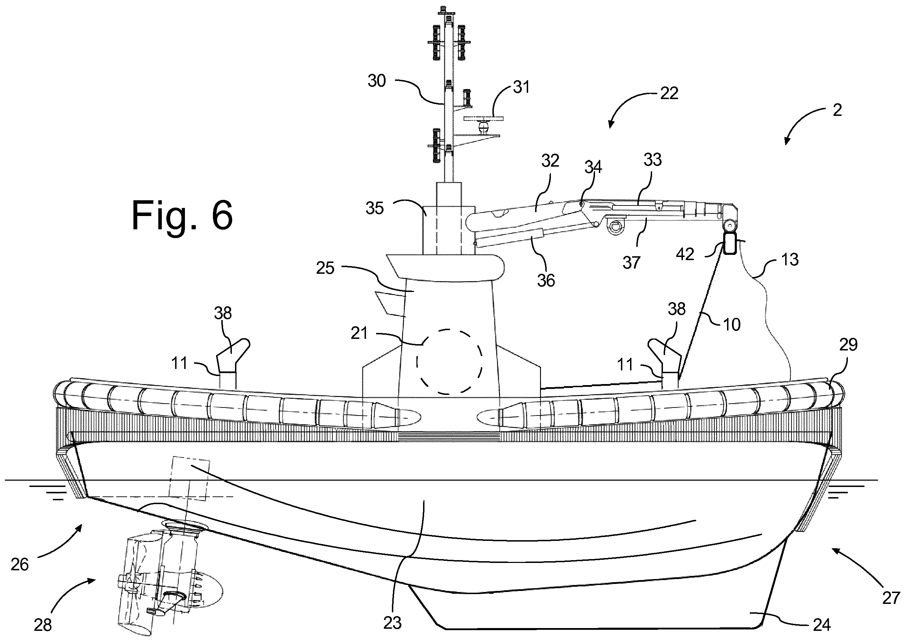

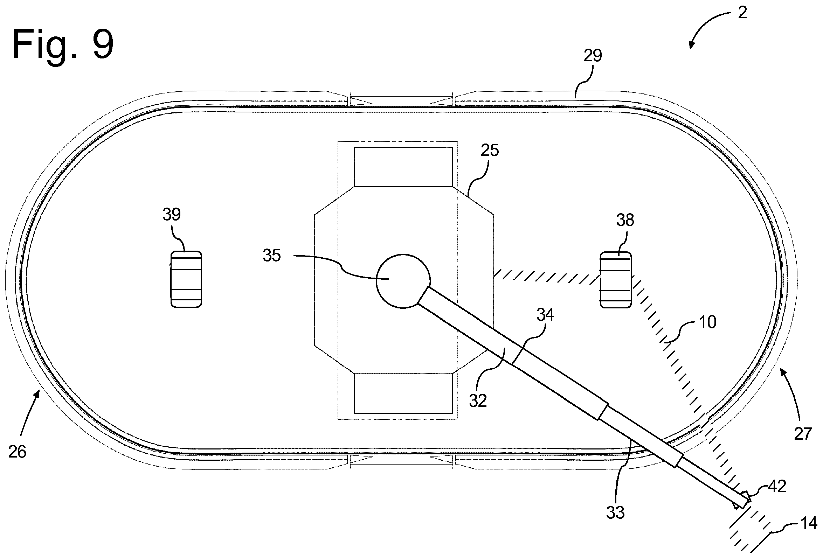

A first hydraulic cylinder 36 is at its proximate end hinged to base member 35 and at its distal end hinged to the outer section 33. The first hydraulic cylinder 36 can be used to lower end raise the crane arm. The crane arm is shown in a lowered, rest position in Fig. 5 and the crane arm shown in a lifted position in Fig. 6, although it's understood that the crane 22 can be raised higher than depicted in Fig. 6. A second hydraulic cylinder 37 extends along the outer section 33 for adjusting the length of the telescopic outer section 33. The crane arm is shown with the outer section in an extended position in Fig. 9

A tool 42 is provided at the free distal end of the crane arm. In an embodiment the tool 42 is a grasping tool, but it is understood that the tool 42 is an exchangeable tool and can be exchanged for a tool for different purposes, in accordance with needs, such as e.g. a fire monitor or electrical connector, a hook, searchlight. Hereto, the tugboat 2 is provided with an assembly of tools that can be fitted to the free distal end of the crane arm. The assembly of tools is stored on the tugboat 2 in a position that can be reached by the free end of the crane 22 so that the tool at the end of the free end of the crane arm can be changed without the need of physical presence of a human operator.

The crane arm is provided with sensors (not shown) that indicate the position of the crane arm. The crane arm is in an embodiment provided with sensors (not shown) for determining the force/load acting on the crane arm.

The tugboat 2 is provided with a support 38 for the crane arm on which the crane arm can rest when it is not in action, i.e. for providing a part position for the crane arm. In an embodiment the support 38 is an integral part of the bitt 11 on the foredeck, and preferably has the form of a yoke. The tugboat can be provided with two supports, one support 38 on the foredeck and one support 39 on the aft deck, so that the crane arm can be part in a forward position or in a rearward position. The support 39 is preferably an integral part of the bitt 12 and shaped like a yoke. The support 38,39 acts as a reference point for calibrating the position of the crane arm. In an embodiment the electronic control unit 50 is configured to recalibrate the crane arm at regular time intervals at support 38 or support 39.

The free, distal end of the towing line 10 is in an embodiment provided with a splice eye 14. The towing line 10 is preferably of a synthetic material that is both strong and light enough to float. Such type of towing line is commercially available. A bushing 15 is provided around the towing line 10 at a position close to the splice-eye 14. The details of the bushing 15 and its function will be described in greater detail further below.

In Fig. 9 the crane is shown holding the free end of the towing line 10 with the telescopic outer section 33 of the crane arm in its extended position. This is a position that is suitable for delivering the free end of the towing line 10 to an able seaman on an assisted vessel 1.

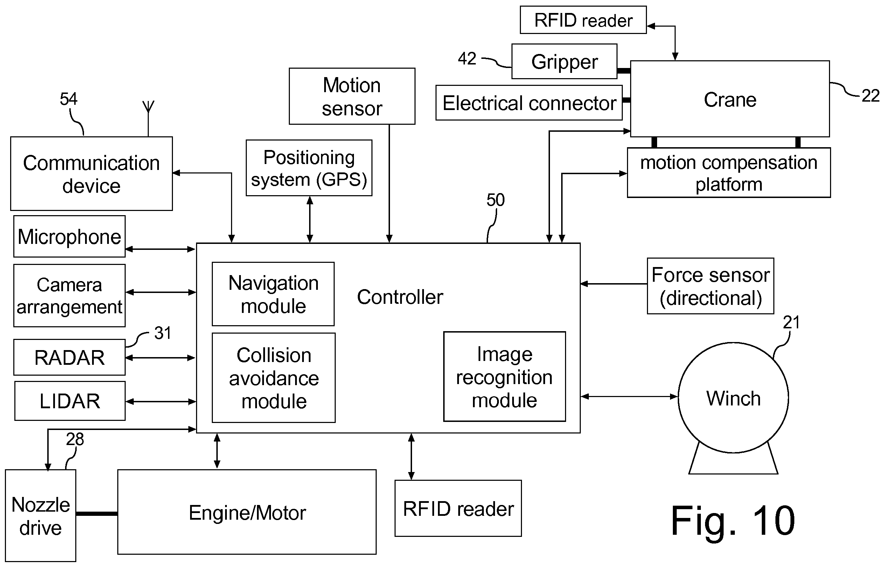

Fig. 10 is a block diagram of the control system and equipment on the tugboat 2. An electronic control unit 50 is connected to an array of sensors, including a positioning system (GPS), a motion sensor (or motion reference sensor - can also sense acceleration forces), a microphone or microphone arrangement, a camera arrangement (preferably digital video cameras), RADAR 31, LIDAR (laser scanner), nozzle angle detector, a first RFID reader, a second RFID reader and a towing line force sensor, preferably a directional force sensor, crane position sensor, crane force sensor. The electronic control unit is also connected to a wireless communication device 54, the power winch 21, the engine or drive motor that drives the nozzle drive 28, to the drive 28 (directional control and angle sensor), the crane 22, including a motion compensation unit and a grasping tool 42. The towing line force sensor can be a combination of a torque sensor on the power winch 21 and a strain gauge or similar force measurement device at each bitt 11,12 so that the electronic control unit 50 is informed of the magnitude of the pulling force applied to the towing line 10 and informed of the direction of the pulling force applied by the towing line 10.

In an embodiment the tugboat 2 is provided with an optical sensor arrangement or digital camera arrangement, preferably with a 360° field of vision in the horizontal plane to offer a full view of the area around the tugboat 2. The camera arrangement can operate in the visual part of the spectrum and/or outside the visual part of the spectrum. The electronic control unit 50 is in an embodiment configured to transmit the signal of the camera arrangement wirelessly to the control center 200 or to the remote control unit 150.

The electronic control unit 50 is provided with a navigation module, a collision avoidance module and an image recognition module, which will be described in greater detail further below.

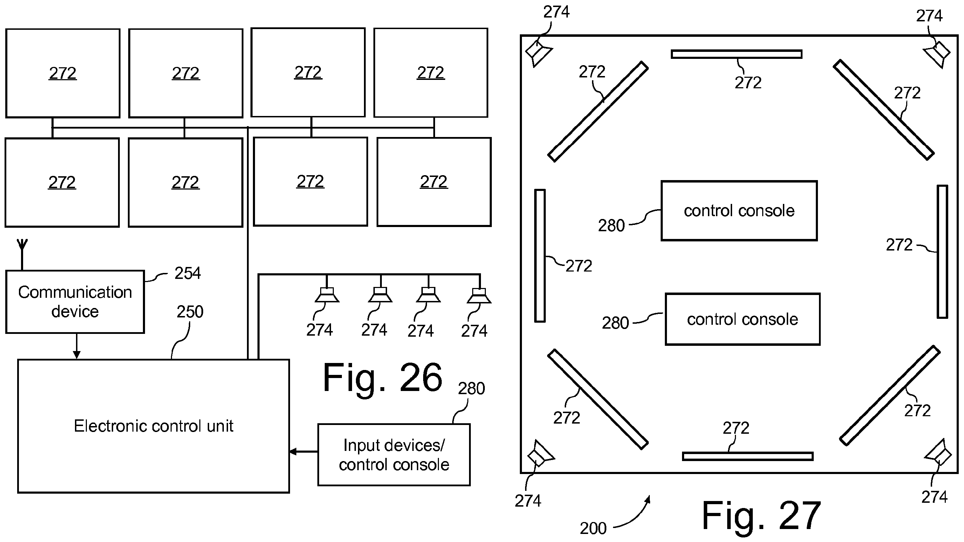

The control center 200, illustrated in Figs. 26 and 27 is provided with a communication device 254, e.g. for receiving the signal from the camera arrangement as sent by the communication device 54 on the tugboat 2, and of course any other information sent by the communication device 54. The control center 200 is provided with display screens 272 for displaying, preferably real-time, and even more preferably real-time and on a 360° circular array of display screens 272, the signal of the camera arrangement to a human operator in the control center. In the present embodiment there are shown eight display screens 272 in a circular arrangement but it is understood that fewer than eight display screens can be used in a circular arrangement and more than eight display screens can be used in a circular arrangement. Further, projectors or the like can be used instead to provide a single completely circumferential display screen.

In an embodiment augmented reality is overlaid on the display screens 277, both for e.g. information about sources of sound (distance and direction) and obstacles in the course of the tugboat 2.

The tugboat 2 is provided with an acoustic sensor, preferably a directional acoustic sensor arrangement with a 360° field of hearing in the horizontal plane. In an embodiment the electronic control unit 50 is configured to transmit the signal from the directional acoustic sensor arrangement to the control center 200 or to the remote control unit 150. The electronic control unit 250 in the control center 200 is configured to represent information on the direction and location of the source of the detected sound on instruments or on the display screens, e.g. by augmented reality.

The control center 200 is provided with transducers (loudspeakers) 274 for reproducing the signal of the optical sensor arrangement received via the wireless communication device 254, preferably real-time, even more preferably real-time and spatially, to a human operator in the control center 200. Thereby, the human operator gets an impression of the direction of the source of sound that has been detected.

The control center 200 is further provided with at least one control console 280 for allowing operators to enter instructions or commands for controlling the operation of the tugboats 2. The control console 280, the wireless communication device 254, the loudspeakers 274 and the display screens 272 are all connected to an electronic control unit 250. The electronic control unit 250 is configured to receive instructions and commands via the control console 280 from a human operator and to transmit these instructions/commands wirelessly to the tugboat 2 concerned. Electronic control unit 250 is also configured to reproduce information received from the tugboats on the display screens 272, via the loudspeakers 274 and on instruments and/or displays in the control console 280.

The positioning system on the tugboat 2 is in an embodiment a satellite-based positioning system (e.g. GPS) and the tugboat 2 is in an embodiment configured to transmit its geographical position as determined by the positioning system wirelessly to the control center 200 and/or the remote control unit 150.

In an embodiment the electronic control unit 50 is configured to berth the tugboat autonomously 2. Hereto, the electronic control unit 50 is configured to accurately react to the near environment of the at least one tugboat 2 to avoid overloading of berth or hull 23. The electronic control unit uses in particular the signal from the motion reference sensor, including acceleration information and jerk (change of acceleration, i.e. the derivative of acceleration with respect to time).

In an embodiment the method for controlling at least one tugboat 2 from the remotely located control center 200 comprises providing a tugboat 2, providing a remotely located control center 200, sending instructions wirelessly from the remotely located control center 200 to the at least one tugboat 2, receiving the instructions wirelessly on the tugboat 2, and carrying out the instructions with the tugboat 2.

In an embodiment sending instructions wirelessly comprises sending instructions for the tugboat 2 to sail to a particular position, the tugboat 2 receiving the instructions and the tugboat 2 sailing to the particular position. In an embodiment the method comprises the tugboat 2 autonomously sailing from its present position to the particular position, preferably including the tugboat 2 navigating autonomously from its present position to the particular position.

In an embodiment sending instructions wirelessly comprises sending instructions to the tugboat 2 to follow an assisted marine vessel 1 at a constant distance, preferably an assisted marine vessel that is connected to the tugboat 2 by a towing line 10 with no tension on the towing line 10.

In an embodiment the method comprises sending instructions from the remote control unit 150, to the at least one tugboat 2 to deliver the free end of a towing line 10 connected to the tugboat 2 to a recipient on a marine vessel to be assisted 1, particularly to a recipient on a particular position on the assisted marine vessel 1, and the tugboat 2 delivering the free end of the towing line 10 to the recipient using the crane 22 to deliver the free end of the towing line 10 to a crew member on the deck of the assisted marine vessel 1.

In an embodiment the method comprises sending instructions from a remote control unit, for example the portable remote control unit 150 on the assisted marine vessel 1 operated by a pilot, to the tugboat 2 to reel in or reel out the towing line 10, and the tugboat 10 reeling in for reeling out the towing line 10 by activation of the power winch 21.

In an embodiment the method comprises sending instructions from a remote control unit, for example the portable remote control unit 150 on the assisted vessel 1 operated by a pilot, for a thrust command with a given size and direction to the tugboat 2 for the tugboat 2 to apply thrust of a size and direction to the assisted marine vessel 1 and the tugboat 2 applying thrust with a size and direction as instructed to the assisted marine vessel 1.

In an embodiment the method comprises sending instructions from a remote control unit, for example the portable remote control unit 150 on the assisted vessel 1 operated by a pilot, for thrust position and optionally an optimum thrust angle, and the tugboat 2 moving to the indicated thrust position and optimum thrust angle.

A first RFID reader is associated with each of the bitts 11,12 and the second RFID reader is associated with the free end of the crane 22. The communication device 54 allows the electronic control unit 50 to receive information and to send information.

The electronic control unit 50 is configured to control the operation of the power winch 21, the operation of the engine/drive motor (power) and the operation of the nozzle drive 28 (angle). The electronic control unit 50 is also configured to control the operation of the crane 22 and of the grasping tool (gripper) 42.

In an embodiment, the signals from the camera, RADAR and LIDAR, the positioning system and if available sonar are transmitted real time via the communication device 54 to the control unit 250 in the control center 200 or to the portable remote control unit 150 of the pilot.

The crane 22 is mounted centrally on the tugboat 2 so it is able to handle the towing rope 10 on the foredeck as well as on the aft deck. The central position will also allow the crane 22 to reach over the side in a berthing situation and when delivering the towing line 10 to an able seaman or other crew member on an assisted vessel 1.

The electronic control unit 50 is configured to control the operation of the crane in response to the position and motion sensors on the crane and/or the motion reference unit of the tugboat to and in response to the RFID reader on the crane.

In an embodiment the crane 22 is provided with a motion compensation unit. In an embodiment the motion compensation unit is provided with an element that can pivot about at least two orthogonal axes and wherein the motion compensation unit comprises actuators for pivoting the element controllably around the at least two orthogonal axes. In an embodiment the crane 22 is placed on a motion compensation platform, i.e. the motion compensation unit is formed by the motion compensation platform. The motion compensation platform may comprise three or more linear actuators that support the platform and around the control of the electronic control unit 50. In another embodiment the motion of the free end of the crane 22 is compensated by using the actuators of the crane, i.e. the motion compensation unit is formed by the actuators of the crane 22. In an embodiment yaw of the tugboat 2 is at least partially compensated by rotation of the crane 22 and surge heave are least partially compensated by raising or lowering and/or extending retracting movements of the crane arm.

The motion sensor (motion reference unit) informs the electronic control unit 50 of the motions of the tugboat 2, such as pitch, roll and yaw, more preferably including pitch, roll, yaw, heave, search and sway. The electronic control unit 50 is configured to compensate for the movement of the tugboat 2 in order to keep the free end of the crane arm substantially motion free relative to the global coordinate system. Alternatively, the electronic control unit 50 can be in receipt of a motion and/or position sensor on board of the assisted vessel 1 and keep the free end of the crane arm substantially motion free relative to the assisted marine vessel 1. In an embodiment the electronic control unit 50 is configured to ignore the actual sailing speed of the tugboat 2, i.e. the motion caused by the sailing speed of the tugboat is not taken into account when compensating. Thus, the free end of the crane arm can be stabilized while the tugboat 2 is following the assisted marine vessel 1. By compensating for the motion of the tugboat 2 or by keeping the free end of the crane arm motion free relative to the assisted vessel 1 it becomes much easier for a crew member on the deck of the assisted vessel 1 to grasp or catch the towing line 10 or the painter 13 attached thereto when the crane arm hands the towing line 10 to the crew member on the deck of the assisted vessel 1. The electronic control unit 50 is configured to compensate the motion of the free end of the crane arm when establishing an electrical connection to shore. Thus, the electronic control unit 50 is configured to minimize the motion of the free end of the crane caused by the motion of the tugboat in situations where this is useful. When the crane 22 is used for collecting the free end of the towing line 10 from its home (parked) position at the bitt 11 or 12, the electronic control unit 50 uses the coordinate system of the tugboat 2 itself as reference. The electronic control unit 50 is configured to use the rest position on the support 38 or 39 to recalibrate the position of the free end of the crane arm.

The electronic control unit 50 is provided with a navigation module allowing the electronic control unit 52 to navigate the tugboat 2 autonomously from a present position to a received instructed position, for example a position near a marine vessel 1 that needs assistance. The navigation module includes nautical charts required for safe navigation of the tugboat 2 and forms a navigation system for the tugboat 2. The navigational module allows the electronic control unit 50 to navigate the tugboat 2 from berth to a target position, e.g. a mobilization position, i.e. a position where the tugboat 2 is to be deployed for assisting a marine vessel 1 to maneuver. The navigation module also allows the electronic control unit to navigate the tugboat back to berth from mobilized position. Thus, upon receiving instruction via the wireless communication unit 54 the electronic control unit 50 sails the tugboat 2 autonomously from berth to a mobilization position and vice versa. Collision with obstacles in the way path of the tugboat 2 is avoided by the electronic control unit deploying the collision avoidance module that is explained in greater detail further below. With the assistance of the collision avoidance unit the electronic control unit 50 takes evasive action if needed in order to avoid a collision with an object, such as another marine vessel, land, a bridge pillar or shallow waters.

The navigation system is preferably an autonomous navigation system configured to maneuver the tugboat 2 to in all scenarios within the intentions of COLREG. COLREG compliant algorithms are be stored in the electronic control unit 50 so that electronic control unit 50 can make the necessary course corrections in order to safely navigate in all scenarios.

The collision avoidance module comprises regulatory information on preventing collisions, such as e.g. COLREGs (Convention on the International Regulations for Preventing Collisions at Sea, 1972) and takes evasive action in accordance with the rules. The collision avoidance module enables the electronic control unit 2 to determine when and which evasive action to take.

The electronic control unit 50 is also provided with an image recognition module allowing the electronic control unit 50 to recognize an image indicating a strong point on the side of the hull 3 and assisted marine vessel 1. In an embodiment the electronic control unit is with the help of the image recognition module capable of recognizing a crew member on deck: assisted marine vessel that is ready to receive a towing line 10.

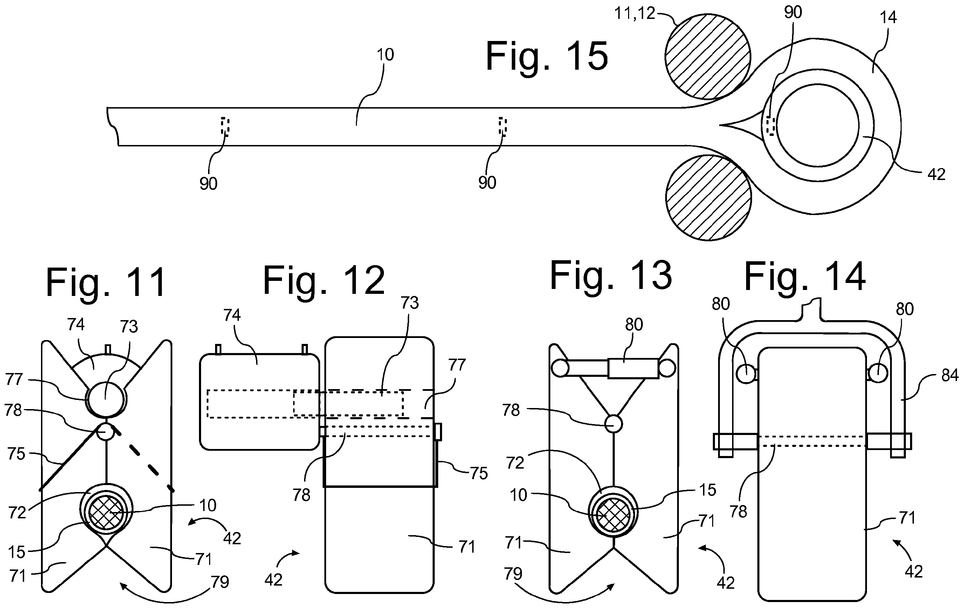

Figs. 11 and 12 illustrate in greater detail a first embodiment of the grasping tool 42 in two side views. The grasping tool 42 comprises two mirror symmetric parts 71 that are pivotally connected to one another at a hinge pin 78. A wire spring 75 urges the two parts 71 together. The two parts 71 form at one end a V-shaped recess for engaging the towing line 10 or for receiving the bushing 15 on the towing line 10. Contact of the surfaces of the V-shaped recess 79 with the towing line 10 or the bushing 15 will create a force urging the two parts 71 away from one another against the force of the wire spring 75, pivoting about hinge pin 78, similar to a washing peg being forced onto a washing line. When the grasping tool 42 is pushed over the towing line 10 or over the bushing 15, the towing line 10 or the bushing 15 will be received in a substantially cylindrical recess 72 formed by two half cylinder recesses in each part 71, as shown in Fig. 11. The portion of the substantially cylindrical recess 72 closest to the V-shaped recess 79 is shaped to form a substantially V-shaped section that facilitates pulling the towing line 10 out of the cylindrical recess 72 against the force of the wire spring 75.

Pivoting movement of the two parts 71 about the hinge pin 7 can be prevented by the action of an electromagnetically, pneumatically or hydraulically controlled locking pin 73. An electric, pneumatic or hydraulic actuator 74 controls the position of the locking pin 73 between a retracted position in which the locking pin 73 does not extend into a cylindrical recess 77 between the two parts 71 and an extended position (shown in Fig. 12) in which the locking pin extends into the cylindrical recess 77. The recess 77 is arranged between the parts 71 on the side of the hinge pin 78 opposite to the cylindrical recess 72. When the locking pin 72 extends into the recess 77 it prevents the parts 71 from moving away from one another and thus the towing line 10 can be kept in the substantially cylindrical recess 72 even if large forces are applied to the towing line 10.

Figs. 13 and 14 show a second embodiment of the grasping tool 42 that is very similar to the first embodiment, except that there is no need for a spring, and the movement of the two parts 71 about the hinge pin 78 is controlled by one or two double acting pneumatic or hydraulic cylinders 80. The recess 72 can be cylindrical since there is no need to pull out the towing line against the force of the spring as the grasping tool 42 can actively open. The one or two pneumatic or hydraulic cylinders 80 extend between the upper (upper as in the orientation of Figs. 13 and 14) tips of the parts 71 and apply a pulling force to open the grasping tool to receive or release a towing line 10 and apply a pushing force to close the grasping tool 42 and to keep the grasping tool 42 closed, with or without a towing line 10 in the cylindrical recess 72. The operation of the pneumatic or hydraulic cylinders 80 is controlled by the electronic control unit 50.

The hinge pin 78 extends from the grasping tool 42 into recesses in opposing arms of a yoke 84 that serves to suspend the grasping tool 42 from the free end of the crane. The grasping tool 42 according to the first embodiment can be suspended from the free end of the crane by a yoke in a similar way.

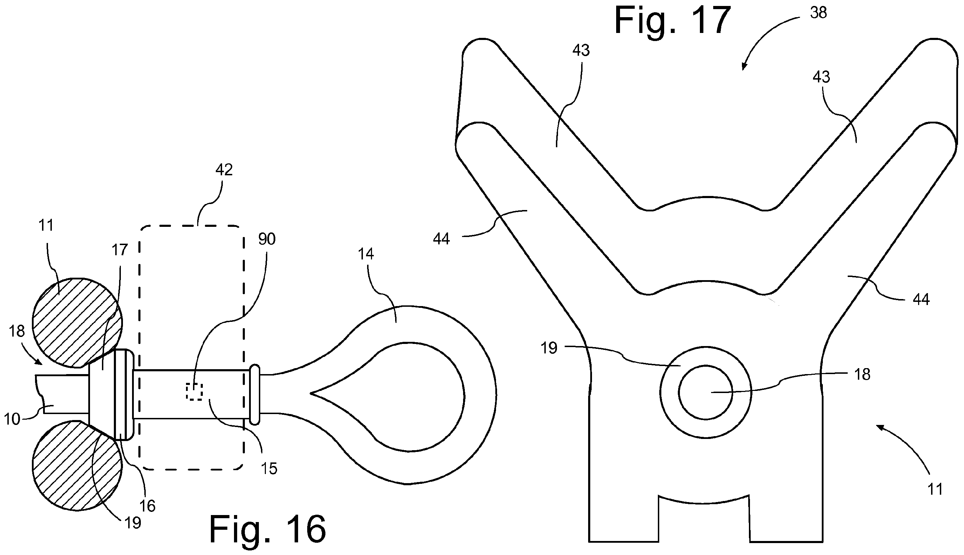

Fig. 15 shows the distal portion of an embodiment of a towing line 10. The free end of the towing line 10 is provided with a hard splice eye 14. The hard splice eye forms end stop. A ring 42 of light metal or strong and resilient plastic is placed in the eye for giving it structural rigidity. The end stop formed by the hard splice eye 14 is sized and shaped such that it cannot pass through the aperture 18 (Fig. 17) in the bitt 11,12 and thus the hard splice eye 14 forms the end stop. This allows for the power winch 21 to reel in the towing line 10 completely until the end stop hits the bitt 11,12.

In an embodiment the power winch 21 is provided with a rotational position sensor (not shown) coupled to the electronic control unit 50, and through this rotational position sensor the electronic control unit 50 is roughly informed of the length of towing line 10 that is reeled out.

In an embodiment the power winch 21 is provided with a force or torque sensor, and the electronic control unit 50 is configured to limit the force applied to the towing line when reeling in using a signal from the force or torque sensor. The electronic control unit 50 preferably being configured to limit the force applied to the towing line 10 by the power winch 21 when towing in towards the end stop.

When the electronic control unit 50 instructs the power winch 21 to reel the towing line 10 a sudden increase in the signal from the force sensor on the power winch 21 informs the electronic control unit 50 to stop reeling in the towing line 10 since it is in its home (part) position.

In an embodiment the towing line 10 is provided with a first RFID tag 90 at or near the free end of the towing line 10. The first RFID tag is preferably a passive RFID 90 tag 90. The tugboat 2 is in an embodiment provided with a first RFID reader, preferably an active RFID reader, the first RFID reader being placed such that the RFID reader detects the first RFID tag 90 when the free end of the towing line 10 is in close proximity of the bitt 11 or 12, i.e. in its home or part position. Preferably, there are provided two first RFID readers, one near each bitt 11,12. The first RFID tag 90 is preferably a passive tag, and the first RFID reader is preferably an active RFID reader.

The first RFID tag 90 is in an embodiment provided in or at the hard splice eye 14. In another embodiment the first RFID tag 90 is provided at the end stop 15.

The first RFID reader is placed such that the RFID reader detects the first RFID tag 90 when the end stop 15 or the hard splice ring 14 is in close proximity of the bitt 11 or 12.

The electronic control unit 50 is coupled to the first RFID reader, and the electronic control unit 50 is configured to terminate the operation of the power winch 21 during a reeling in operation when the first RFID reader detects the presence of the first RFID tag 90 at bitt 11 or 12.

In an embodiment the crane 22 is provided with a second RFID reader, preferably an active RFID reader. The second RFID reader is being placed in close proximity to the gripping tool 42 so that the second RFID reader will detect the first RFID tag when the gripping tool is in a suitable position for gripping the towing line at or near the splice eye 14. The electronic control unit 50 will thus be informed when the gripping tool 42 is in the vicinity of the free end of the towing line 10.

The towing line 10 is in an embodiment provided with a plurality of RFID tags 90 spaced along the length of the towing line 10 at intervals, preferably regular distance intervals. The first RFID reader is placed such that it registers an RFID tag 90 of the plurality of RFID tags when such an RFID passes through the aperture 18 (Fig. 17) in the bitt 11,12 during reeling in or reeling out of the towing line 10. Each RFID tag 90 may have individual information stored thereon so that the trial control unit 50 can exactly determine how much links of the timeline has been reeled in or out when a particular RFID tag 90 passes the 1st RFID reader. Thus, capable electronic control unit 50 is configured to control the length of towing line 10 reeled out very accurately using the signal from the first RFID reader and is able to determine an error, such as a broken towing line 10 or towing line 10 piling up between the power winch 21 and the bitt 11 or 12 due to lack of tension on the towing line 10.

In another embodiment the towing line 10 is provided with a plurality of optical tags spaced along the length of the towing line 10 at intervals, preferably regular distance intervals, an optical reader connected to the electronic control unit 50 at the power winch 21, at the bitt 11, 12 or between the power winch 21 and the bitt 11, 12 detects the optical tags for determining the length of the towing line 10 that is reeled out.

Fig. 16 shows another embodiment of a towing line 10 with a soft splice eye 14. A bushing 15, preferably made from a light metal or from strong and resilient plastic is placed over the towing line 10 and secured to the towing line 10 close to the soft splice eye 14. Thus, the towing line 10 extends through the bushing 15. The bushing 15 is provided with a flange at its end closest to the soft splice eye 14 and with an end stop 17 at its opposite end. The main extend of the bushing 15 serves as a grasping object for the grasping tool 42 (illustrated in Fig. 16 by interrupted line). The length of the main extent of the bushing 15 is sufficient for allowing the grasping tool 42 to grasp around the bushing 15. The end stop 17 comprises a conical frustum that serves as an engagement surface for engaging a matching conical seat 19 in the bitt 11,12 (Fig 16 and 17). The aperture 18 in the bitt 11,12 has a diameter that is large enough for the towing line 10 to pass through but too small to allow the end stop 17 to pass through the aperture 18. When the power winch 21 pulls reels in the towing line 10 the end stop 17 will abut with the bitt 11,12 and the conical surface seat 19 and tension in the towing line 10 maintained by the power winch 21 will ensure that the bushing 15 will always extend in the same direction from the bitt 11,12 as shown in Fig. 16. Thus, when the towing line 10 is completely reeled in the position and orientation of the bushing 15 is known and always the same. This greatly facilitates grasping the bushing 15 with the grasping tool 42 since it is always aware of the exact position of the bushing 15.

The support 38 is preferably an integral part of the bitt 11,12 and comprises a yoke shaped support formed by two wings 44 that provide two tapering guide services 43 for guiding the crane arm towards the center of the support 38. The support surface of the yoke is preferably inclined to match the angle of the crane arm resting thereon in its rest (parking) position.

In an embodiment the electronic control unit 50 is provided with instructions for moving the grasping tool 42 from any arbitrary position to a first reference position close to the bitt 11,12, by manipulation of the crane arm. The electronic control unit 50 is provided with instructions to activate the grasping tool to grasp the towing line 10 when the grasping tool 52 has arrived at the first reference position. The electronic control unit 50 is also provided with instructions for moving the grasping tool 42 at the free end of the crane arm from the first reference position to an instructed position, the instructed position preferably being a position received wirelessly by the communication device 54 from a remote transmitter, such as e.g. the remote control unit 150 of the pilot. The electronic control unit 50 is also configured to reel out the towing line 10 simultaneously with the crane arm moving the free end of the towing line towards a desired position. Thus, a certain tension can be maintained on the towing line 10 while the crane 22 moves the free end of the towing line 10 from the parked position to a desired position.

The electronic control unit 50 is configured to deactivate/open the grasping tool 42 for releasing the towing line 10 when the grasping tool 42 has arrived at the instructed position and/or when the medication device 54 on the tugboat 2 has received a confirmation from a remote transmitter to deactivate/open the grasping tool i.e. when the crew member on the deck of the assisted vessel 1 has received the towing line 10. The remote control unit 150 of the pilot is provided with an input means to indicate that the towing line 10 has been delivered so that the grasping tool 42 can release the towing line. Alternatively, the crew member can be provided with his portable wirelessly capable unit for issuing the acknowledgment that the towing line 10 has been received.

In an embodiment the tugboat 2 is provided with a second reference point for calibrating the crane or robot arm in a coordinate system relative to the tugboat, the second reference point can be a fixed structure provided on the tugboat, such as the support 38 or 39. The electronic control unit 50 is configured to recalibrate the crane 22 at the second reference point at given time intervals.

The electronic control unit 50 is configured to reel in the towing line 10 by activation of the power winch 21 upon receipt of an instruction thereto via the communication unit 54, i.e. when the towing line 10 has been received released from the assisted marine vessel 1. The instruction to reel in the towing line 10 can originate from the remote control unit 150, e.g. when the pilot has decided that the assist operation is completed and a crew member on the system vessel 1 has detached the towing line 10 from the bollard or capstan on the system marine vessel 1. An additional remote control unit (not shown) can be carried by the crew member handling the towing line 10 on the deck of the assisted marine vessel 1 for enabling the crew member concerned to communicate wirelessly to the tugboat 2 that the towing line 10 has been released from the assisted marine vessel 1 and can be reeled in by the tugboat 2. This additional remote control unit for use by the crew member that handles the towline on deck is in an embodiment combined with the beacon X.

During the reeling in operation the electronic control unit 50 keeps track of the length of towline 10 that is reeled out using the signal from a rotational position sensor on the power winch 21 and if available, using the signal from the first RFID reader or the optical reader.

The electronic control unit 50 is configured to reel out the towing line 10 by activation of the power winch 21 upon the receipt of instructions thereto via the location device 54 so that the tugboat 2 can assume the optimal desired thrust position at an optimal distance from the assisted marine vessel 1. The instruction to reel out the towing line 10 can be issued by the remote control unit 150 of the pilot.

In an embodiment the crane arm is provided with a digital camera and the image recognition unit is configured to recognize a graphical marking on the hull of a marine vessel 1 to be assisted or to recognize a crew member on deck of the assisted marine vessel 1 or to recognize a fairlead on the assisted marine vessel 1 or to recognize a docking station or berthing location. In an embodiment the signal from the camera is wirelessly transmitted to a remotely located recipient, such as the control center 200, via the communication device 54.

In an embodiment the tugboat 2 is provided with a sensor (not shown) for detecting a position of a beacon X (Fig. 3) on an assisted marine vessel 1. The beacon X on the assisted marine vessel 1 can be a GPS beacon, radar beacon or other suitable beacon allowing easy and exact determination of its position. The beacon X is in an embodiment carried by the crew member on board of the assisted vessel 1 that is to receive the towing line 10. Thus, the electronic control unit 50 is informed of the exact position at which the towing line 10 is to be delivered on the assisted marine vessel 1. The beacon X can be part of a package including one or more beacons X and the remote control unit 150. This package is carried on board of the assisted marine vessel 1 by the pilot. The pilot handles the remote control unit and the pilot hands out the beacon X or beacons X to the respective crewmembers that are to receive the towing line(s) 10. In an embodiment the tugboat 2 is provided with a dedicated sensor for detecting the presence and exact position of beacon X in order to facilitate delivering the towing rope 10 at the exact position of the crew member that is ready to accept the towing line 10.

In an embodiment the electronic control unit 50 is configured to select an exchangeable tool from the assembly of tools in receipt of an instruction to select an exchangeable tool. The instruction to select an exchangeable tool comprising in an embodiment information for selecting a particular exchangeable tool in relation to a task to be carried out by the crane 22. The instruction to select a changeable tool can originate from the electronic control center 200 as part of an autonomous operation or from a remote sender, such as the remote control unit 150 of the pilot.

In an embodiment the remote control unit 150 is configured for wirelessly controlling the operation of at least one tugboat 2 from a position remote from the at least one tugboat 2, e.g. from the system marine vessel 1 by a pilot entering instructions into the remote control unit 150 via a user interface of the remote control unit 150. The remote control unit comprises a transmitter-receiver arrangement for transmitting and receiving information between the control centre and the tugboat 2. Similarly the tugboat 2 comprises a reciprocal transmitter-receiver arrangement for send and receiving information to and from the remote control unit 150. The remote control unit 150 is configured to send command instructions to the tugboat 1 to control movement thereof.

The remote control unit 150 is configured to transmit thrust commands wirelessly to the at least one tugboat 2. The electronic control unit 50 is configured to control the propulsors of the tugboat 2 for executing the thrust commands wirelessly received from the remote control unit 150. In an embodiment a thrust command comprises a vector indicating size and direction of the thrust to be applied.

Thrust commands are in an embodiment executed as vectors in relation to the hull 3 of the assisted marine vessel 1. The electronic control unit 50 is in an embodiment configured to block invalid commands, i.e. commands leading to collision between vessels involved.

In an embodiment the remote control unit 150 is configured to transmit follow the assisted marine vessel 1 instructions to the at least one tugboat 2. The electronic control unit 50 is configured to control the tugboat 2 to follow the assisted marine vessel 1 autonomously at a constant distance to the assisted marine vessel 1 for executing the received instruction. The follow the assisted marine vessel 1 instruction may include instructions on the tension required on the towing line 10 during the follow the assisted marine vessel 1 operation.

In escort (follow me mode) the desired position of the tugboat to is in an embodiment defined as either a relative vector from a reference point on the assisted marine vessel 1 or as an arbitrary point in the proximity of the assisted marine vessel 1.

The electronic control unit 50 is in an embodiment configured to transmit sensor data to the remote control unit 150, and the remote control unit 150 is in an embodiment configured to receive and present the received information to the pilot. Thus, the pilot can be informed of e.g. the exact position of the tugboat 2, the amount of thrust and direction of thrust applied and the tension on the towing line 10.

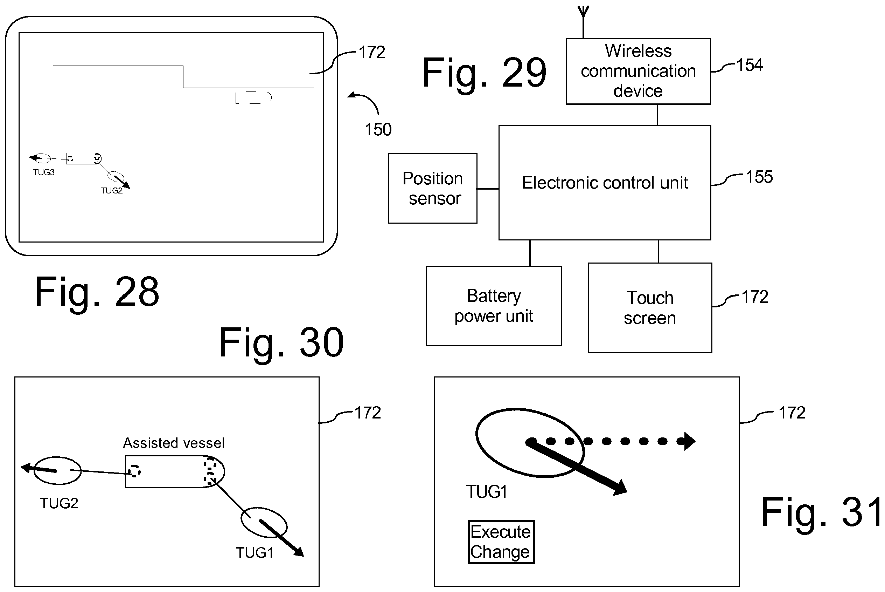

Figs. 28 to 31 illustrate the remote control unit 150 and its operation. In an embodiment the remote control unit 150 is a portable tablet computer 150 with a touch screen 172. The tablet computer 150 comprises an electronic control unit 155 coupled to a wireless communication device 154, to a battery power unit, a position sensor (GPS) and to the touch screen 172.

In an embodiment the remote control unit 150 is configured to transmit its (GPS) position to the tugboat 2 in order to allow the tugboat 2 to identify the position of the assisted marine vessel 1, i.e. in order to facilitate the tugboat 2 to reach the mobilized position in the vicinity of the assisted marine vessel 1.

The electronic control unit 155 is configured to display the location of the assisted marine vessel 1 in the form of an outline of the vessel on the display screen together with the tugboats 2 connected thereto (TUG1,TUG2, .....TUGn) on a navigational chart, as shown in Fig 28. The desired mooring position of the assisted marine vessel 1 is by way of example indicated by the outline of the vessel 1 in interrupted lines at a mooring position. The pilot can zoom in on the assisted vessel 1 using the touchscreen to select at which position on the assisted marine vessel 1 a towing line 10 is attached. The possible attachment positions are indicated by the circles of interrupted lines in the outline of the assisted vessel as shown in the screenshot of Fig. 30. The pilot can change the connection position using the touchscreen 172 and the pilot can select one of the tugboats 2 on the touchscreen 172 in order to send an instruction to the tugboat 2 concerned. The pilot can change the desired position of a tugboat 2 by moving the tugboat 2 concerned to another position on the screen.

Fig. 31 is a screenshot illustrating the information on the touchscreen 172 when a particular tugboat 2 has been selected. The uninterrupted vector indicates the present thrust size and direction applied by the tugboat 2 concerned (in this patent case TUG1). The indicated present thrust size and direction can be in accordance with the latest issued thrust instruction (if any) or in accordance with magnitude and/or direction of the force on the towing line 10 as detected with the sensors on the tugboat 2.

By using the touchscreen 172 the pilot can indicate a new thrust size and direction, indicated in Fig. 31 by the interrupted vector. The pilot can execute the change and send the new thrust instruction to the tugboat 2 concerned by pressing the virtual button labeled "execute change" on the touchscreen 172.

When the communication unit 54 on the tugboat 2 receives the new thrust command from the remote control unit 150 the electronic control unit 50 controls the engines/motors and azimuth thrusters 28 accordingly in order to apply thrust of a size and direction to the assisted marine vessel 1.

The remote control unit 150 can also be used by the pilot to issue a follow assisted marine vessel command to the tugboat 2. In response to receiving follow the assisted marine vessel instructions by the wireless communication unit 54 the electronic control unit 50 operates the engines and azimuth thrusters (nozzle drive) 28 accordingly. Thus, the electronic control unit 50 causes the tugboat 2 to follow the marine vessel 1 at a constant distance and even more preferable the electronic control unit causes the tugboat 2 to follow the assisted marine vessel 1 at a constant distance and a constant relative position with respect to the assisted marine vessel 1.

The remote control unit 150 is in an embodiment provided with loudspeakers for reproducing sounds picked up by the microphone (arrangement) on the tugboat 2 or for reproducing other information that the pilot needs to receive from the tugboat 2.

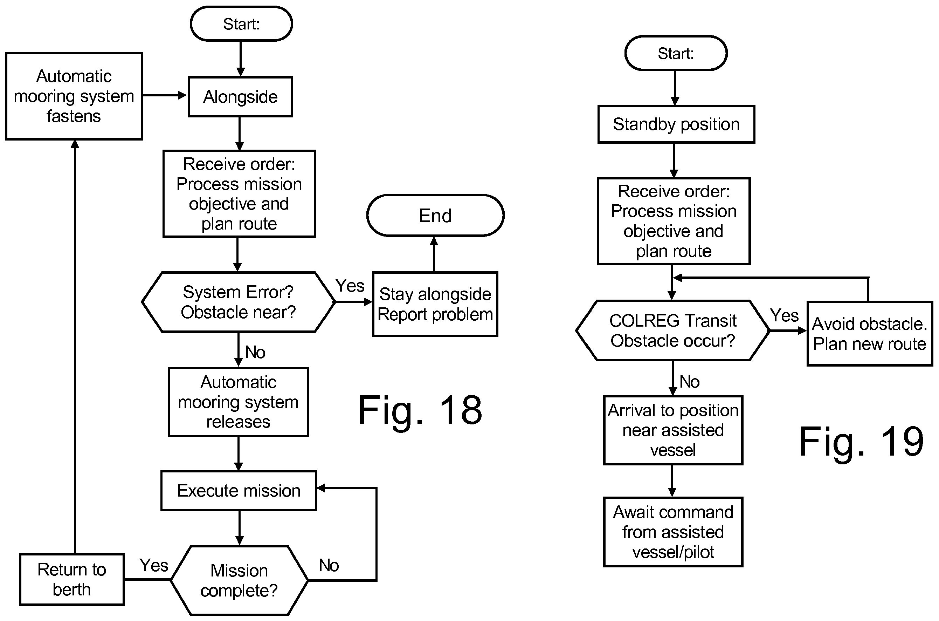

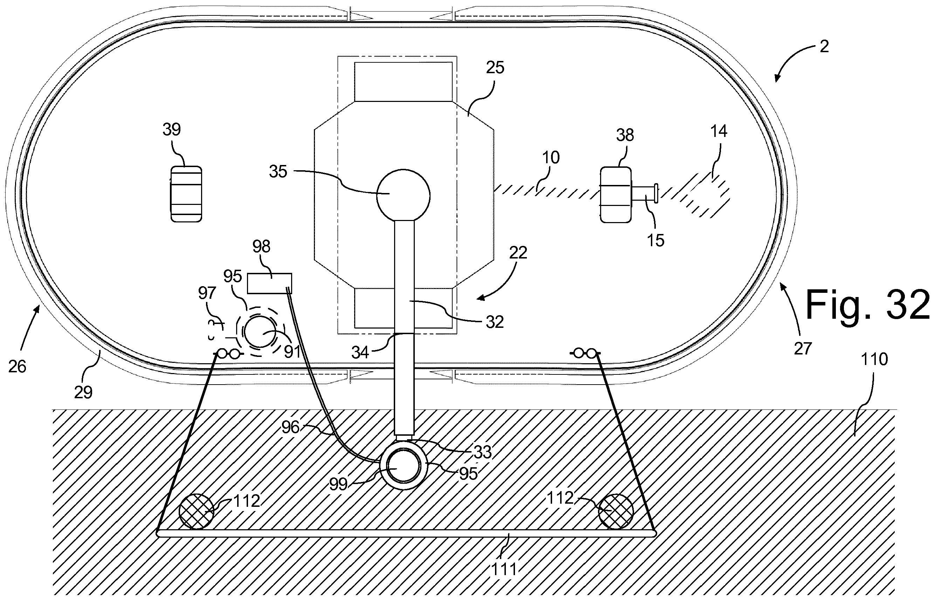

In an embodiment the tugboat 2 is provided with an automatic mooring system that uses a spreader bar 111 (Fig. 32) to secure the boat 22 bollards 112 located on shore 110. The crane 22 is used to manipulate the spreader bar 110, i.e. to move the spreader bar from a position on or at the boat to a position behind the bollards 112 (behind as seen from the boat 2). A mooring line is attached to each end of the spreader bar 111 and the mooring lines are secured to the boat 2, preferably via an automatic tensioning system including one or more small power winches (not shown). Fig. 18 is a flowchart illustrating an embodiment of a method automatically mooring and releasing the boat 2. When the tug boat 2 is alongside it receives a mission order via communication unit 54 and the electronic control unit 50 processes the mission objective and plans a route. Next, the electronic control unit 50 checks if there is any system error or obstacle near, and if so the electronic control unit 50 decides to stay alongside and reports the problem wirelessly via the communication unit 54 to the control center 200 and the process ends. If there is no system error and no obstacle near the electronic control unit 50 activates the automatic mooring system to release the boat to from shore. Next, the mission is executed and the electronic control unit verifies if the mission is complete. If the mission is complete the electronic control unit 50 controls the boat 2 to return to berth by planning and executing a return route. In the vicinity of the berth the electronic control unit uses the available sensor signals for situational awareness and carefully maneuvers the boat to alongside. Thereupon, the electronic control unit 50 activates the automatic mooring system and fastens the boat 2 to shore and the process is returned to the block "alongside".

Figure 19 is a flowchart illustrating a method of operating the tugboat 2 starting by the tugboat 2 being in a standby position and thereafter receiving an order via the communication unit 54. The electronic control unit 50 processes the mission objective and plans and executes a route. If an obstacle is detected by the collision avoidance system, as described in greater detail further below, the electronic control unit 50 takes evasive action and plans a new route if necessary. When the tugboat 2 has arrived near the assisted marine vessel 1 it awaits new instructions/commands from the pilot on the assisted marine vessel 1.

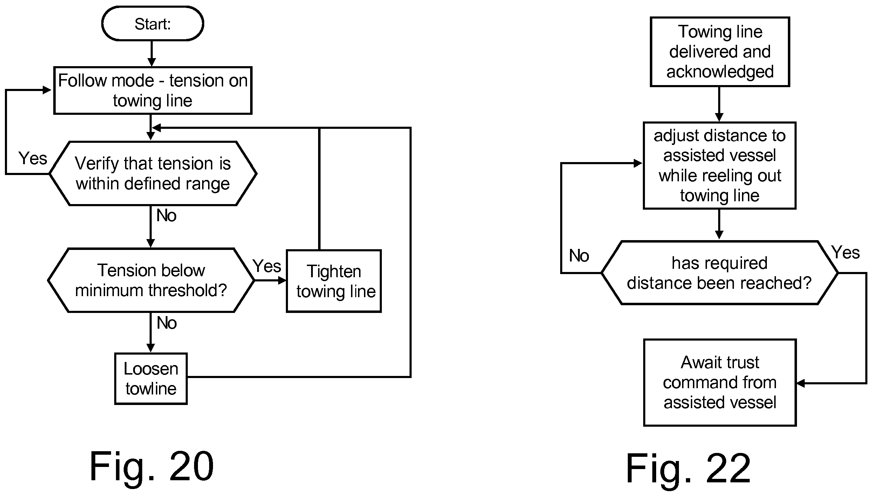

Fig. 20 is a flowchart illustrating a method of operating the tugboat 2 being in the vicinity of the assisted marine vessel 1 and receiving a follow the assisted vessel 1 with tension on the towing line 10. In the next step the electronic control unit 50 verifies that the tension on the towing line 10 is within a defined range, using the available sensor information. If the tension is within the defined range the electronic control unit continues by controlling the tugboat 2 to follow the assisted marine vessel 1 at a fixed distance and with the required tension on the towing line 10. If the tension is below a minimum threshold the electronic control unit 50 controls the operation of the tugboat 2 in order to increase the tension on the towing line 10. If the tension on the towing line 10 is above a maximum threshold, the electronic control unit 50 controls the operation of the tugboat in order to decrease the tension in the towing line 10. A change in tension of the towing line 10 is achieved by e.g. changing the power that the engine/motor delivers to the azimuth thruster 28.

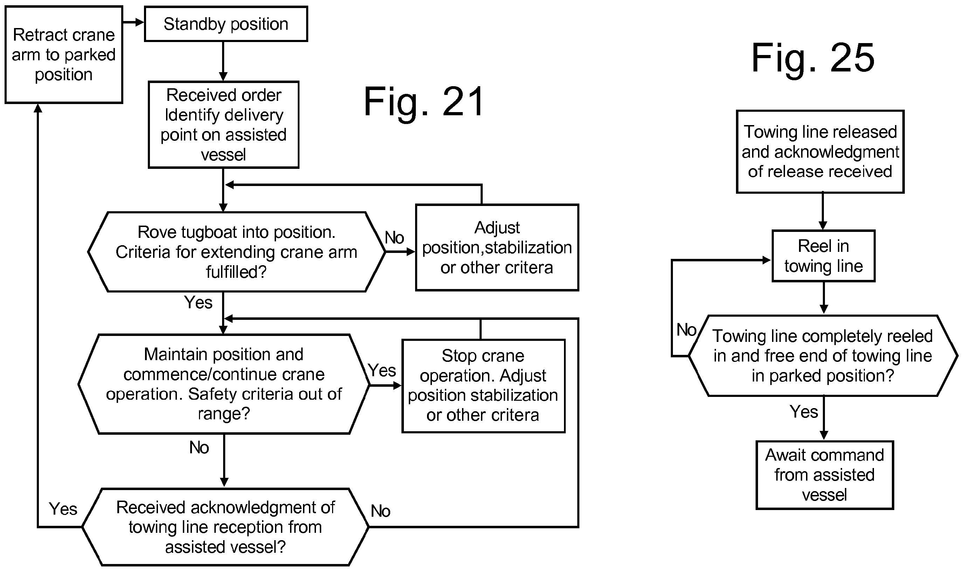

Fig. 21 is a flowchart illustrating a method of operating the tugboat 2 being in a standby position in the vicinity of the assisted marine vessel 1 and thereupon receives an instruction to deliver the towing line 10 to a particular position on the assisted marine vessel. Hereto, the electronic control unit 50 identifies the delivery point on the assisted marine vessel 1, for example using the beacon X or using the camera and image processing software to identify a crew member on the deck of the assisted marine vessel 1 ready to accept the towing line 10. Next, the electronic control unit 50 controls the tugboat 2 to rove the tugboat 2 into position i.e. close to the identified delivery point. Next, the electronic control unit 50 verifies that the criteria for extending the crane arm are fulfilled. If the criteria for extending the crane arm are not fulfilled the electronic control unit 50 adjusts the position of the tugboat or adjusts the stabilization (is motion compensation) of the crane 22. If the criteria for extending the crane arm are fulfilled the electronic control unit 50 maintains the position of the tugboat and commences and/or continues the crane operation and verifies if the safety criteria are out of range. If the safety criteria are out of range the crane operation is terminated. Next, the position of the tugboat 2 and/or crane 22 is adjusted, the stabilization of the crane 2 is adjusted and or other criteria are adjusted in order to fulfill the safety criteria. When the safety criteria are within range the crane operation is continued until the communication unit 54 receives an acknowledgment from the assisted marine vessel 1 that the towing line 10 has been received. If this acknowledgment has not been received the crane operation is continued. When the acknowledgment is received, the crane operation is terminated and the crane is retracted and parked in its rest position shown in Fig. 5.

As shown in Fig. 22, after receiving the acknowledgment that the towing line 10 has been delivered, the electronic control unit 50 adjusts the distance between the tugboat 2 and the assisted marine vessel 1 while reeling out the towing line 10. This process continues until the required distance has been reached. When the required distance has been reached the process moves to awaiting a thrust command from the assisted marine vessel 1.

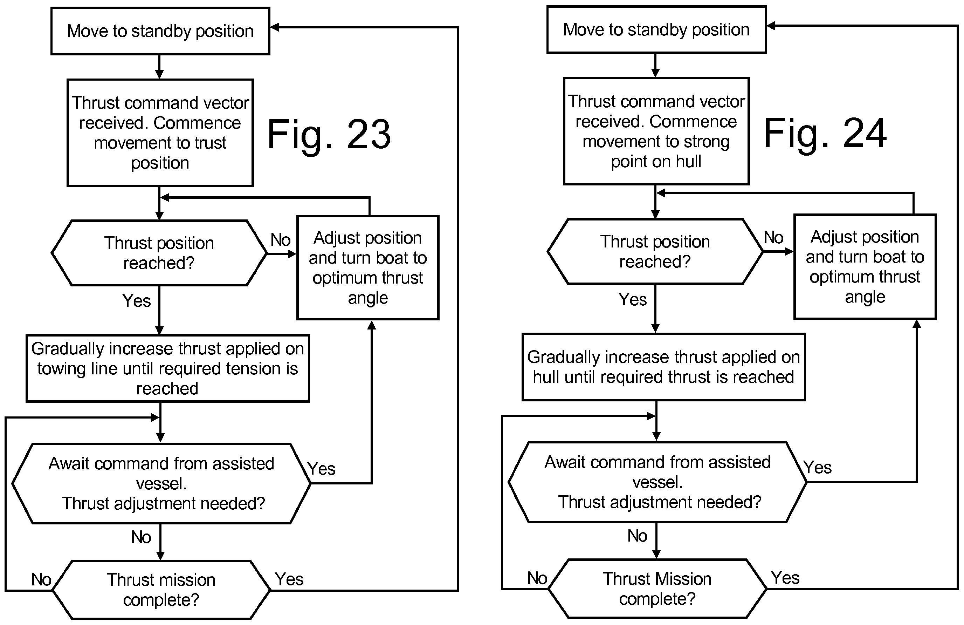

Fig. 24 illustrates the process when a thrust command is received. The tugboat is in the standby position with the towing line 10 connected to the assisted marine vessel 1. The electronic control unit receives a thrust command via the communication device 54 from the electronic control unit 150, issued by the pilot. The thrust command includes a thrust vector that indicates the magnitude and direction of the thrust that needs to be applied. The thrust command may in an embodiment also include a thrust position i.e. a position relative to the assisted marine vessel 1 from which the thrust command is to be executed and the thrust command may also include a thrust angle. Alternatively, the electronic control unit can be configured to determine the optimal thrust angle. Upon receipt of the thrust command the electronic control unit 50 controls the tugboat 2 to move to the thrust position. Next, the electronic control unit 50 verifies that the thrust position and angle have been reached. If the thrust position has not been reached the electronic control unit adjusts the position of the tugboat 2 and turns the vessel to the optimal thrust angle. When the thrust position and angle have been reached, the electronic control unit 50 gradually increases the thrust applied on the towing line 10 until the required tension is reached. Thereupon, the electronic control unit 50 maintains the required tension on the towing line 10 and awaits the next command from the assisted marine vessel 1 (from the remote control unit 150) while determining whether a thrust adjustment is needed in order to maintain the tension on the towing line 10. If a new thrust command is received from the remote control unit 150, the electronic control unit adjusts the position and turns the tugboat 2 to the optimum thrust angle. Next, the process returns to the box "thrust position reached?" and the process repeats itself. If no thrust command is received, the electronic control unit verifies if the thrust mission is complete. If the thrust mission is not complete, the process returns to the box "await command from assisted vessel "Thrust adjustment needed?". If the thrust mission is complete the process returns to the box "moved standby position".

The process in Fig. 24 is practically identical to the process in Fig. 25, except that the thrust is applied by the tugboat 2 by engaging a strong point 9 on the hull 3 of the assisted marine vessel with the bow 27 of the tugboat 2. As described, the electronic control unit 50 identifies the strong point 9 using the camera and the image recognition software to identify the marking on the hull 3. In the process of Fig. 24 is not possible to use the tension on the towing line 10 for verifying that the required thrust is applied. Instead, the electronic control unit uses a lookup table or a mathematical model of the tugboat 2 to control the propulsors to achieve the required amount and direction of thrust that is applied to the hull 3 of the assisted marine vessel 1.

Figure 25 illustrates the process for releasing the towing line 10 when the thrust mission has been completed. The electronic control unit 50 awaits the receipt of an acknowledgment that the towing line 10 has been released from the assisted marine vessel 1. Thereupon the electronic control unit 50 activates the power winch 21 to reel in the towing line 10. While reeling in, the electronic control unit 50 verifies whether the towing line 50 is completely reeled in, as described above, and that the free end of the towing line 10 is in the parked position. If this is not the case, the process of reeling in continues. When the towing line 10 is completely reeled in, the electronic control unit 50 awaits a further command from the assisted marine vessel 1 via the remote control unit 150 or from the control center 200.

Fig. 32 illustrates the tugboat 2 (but could be any other type of boat provided with a crane 22 or robot arm) moored to shore 110. Mooring lines connected to a spreader bar 111 are used to secure the boat 2 to shore 110. The crane 22, is in this embodiment configured for establishing a connection to shore 110 when the boat 2 is moored. The connection to shore 110 can be an electrical data and/or electrical power connection. The electronic control unit 50 is configured to establish the electrical connection to shore using the crane 22. The electronic control unit 50 can be programmed to carry this process out autonomously when the boat 2 is moored, and electronic control unit 50 is also configured to disconnect the electrical connection when the boat is about to leave berth. The electronic control unit 50 is configured to bring a connector in connection with a connection point on shore for establishing the connection. In an embodiment the connector is formed by a coil 95 for establishing an inductive connection. The counterpart on shore 110 is a coil in a matching pole 99 on shore (quay or the like). The coil 95 is provided with an aperture sized and shaped to fit over the pole 99. The coil 95 has a grasping element 97 attached thereto. The grasping element 97 is similar or identical in shape and size to the bushing 15. Thus, the grasping element 97 will match the grasping tool 42 and thereby the coil 95 can be handled with the grasping tool 42. The coil 95 has a power cable 96 attached thereto that extends to a cable reel 98 that is provided on the boat 2, and the cable reel 98 is in turn connected to the electrical system of the boat 2. When the coil 95 is not in use, it is placed by the crane 22 over a simple pole 91 on the deck of the boat 2, as indicated by the interrupted lines in Fig. 31.

The electronic control unit 50 is configured to pick up the coil 95 using the grasping tool 42 and the grasping element 97 from the deck of the boat 2 and to move the coil 95 towards and over the pole 99 on shore. Thus, an inductive electrical connection is established with shore that can be used to transmit power and/or data.

The electronic control unit 50 is configured to maintain the electrical connection while the boat is moored, so that e.g. batteries on board of the boat 2 can be charged, and electrical equipment on board the boat 2 can be supplied with electric power. The electronic control unit 50 allows the crane 22 arm to move freely to accommodate movements of the boat 2 relative to shore while the connector 95 is connected to the connection point in the form of the coil 99.

The electronic control unit 50 is configured to disconnect the electrical connection when the boat 2 has to leave berth, e.g. go into action. Hereto, the electronic control unit 50 is configured to grasp the grasping element 97 using the grasping tool 42 and to lift the coil 95 from the pole 99 with the coil on quay and to move the coil 95 to and over the pole 91 on deck.

In an embodiment the cable reel 98 automatically reels the power cable 96 in and out keeping a predetermined amount of tension on the power cable 96, using resilient or other suitable means.

In an embodiment the tugboat 2 is configured to automatically prevent capsizing or sinking due to an excessive load on the towing line 10. Hereto, the tugboat 2 is provided with a sensor arrangement configured for sensing the size and direction of the pulling force that the towing line 10 exerts on the tugboat 2. This sensor arrangement can be a combination of a sensor on the power winch 21 that determines the torque applied thereto and the strain gauge or the like at the bitts 11, 12, which is particularly helpful for determining the direction of the force that the towing line exerts on the tugboat 2. The tugboat 2 is also provided with a sensor arrangement configured for sensing the orientation of the tugboat. The motion sensor (emotion reference unit) can be used for this purpose. The electronic control unit 50 is in receipt of the signal of the above-mentioned sensors, and the electronic control unit 50 is informed of the size and direction of thrust generated by the propulsors. The electronic control unit 50 determines if the tugboat 2 exceeds a safety threshold on the basis of the sensed size and direction of thrust, the sensed size and direction of the pulling force, and the sensed orientation of the tugboat. The safety threshold can include a maximum inclination of the tugboat 2 relative to the horizon.

In an embodiment the electronic control unit 50 reduces the size of the thrust and/or changes the direction of thrust when the electronic control unit 50 has determined that a safety threshold has been exceeded. Preferably, the electronic control unit will communicate this reduction in thrust size and or change in the direction of thrust wirelessly via the communication device 54 to the control center 200 or to the remote control unit 150.

In an embodiment tugboat 2 is provided with an arrangement for disconnecting the tugboat 2 from the towing line 10 in response to a command from the electronic control unit 50, the arrangement preferably comprising a device for severing the towing line 10. The arrangement for disconnecting the tugboat 2 from the towing line 10 by severing preferably includes a knife or ax or the like or an element to apply heat to the typically polymer-based towing line 10 for severing the towing line 10.

The electronic control unit 50 is preferably configured to sever the towing line 10 when the electronic control unit 50 has determined that the tugboat 2 has exceeded a second safety threshold that is higher than the first safety threshold. In an embodiment the first and second safety thresholds are a risk of the tugboat capsizing and/or the first and second safety thresholds are a risk of the tugboat sinking.

In an embodiment the electronic control unit 50 is configured to determine the risk of the tugboat 2 capsizing or sinking on the basis of a computer model that simulates the behavior of the tugboat 2. Hereto, the electronic control unit 50 can be provided with a mathematical model of the tugboat 2 that simulates the behavior of the tugboat 2 in response to thrust, towing line force and direction and optionally waves.

Thus, in an embodiment the electronic control unit 50 determines the size and direction of thrust created by the propulsors of the tugboat 2, determining the size and direction of a pulling force applied to the tugboat 1 by a towing line 10, determines the orientation of the tugboat 2, and determines if the combination of the size and direction of thrust and the size and direction of pulling force and the orientation of the tugboat 2 exceed a safety threshold. The electronic control unit 50 can further be configured to adjust the size and/or direction of the thrust in order to prevent the tugboat 2 from exceeding the safety threshold. The electronic control unit can further be configured to sever the towline 10 when a safety threshold is exceeded.

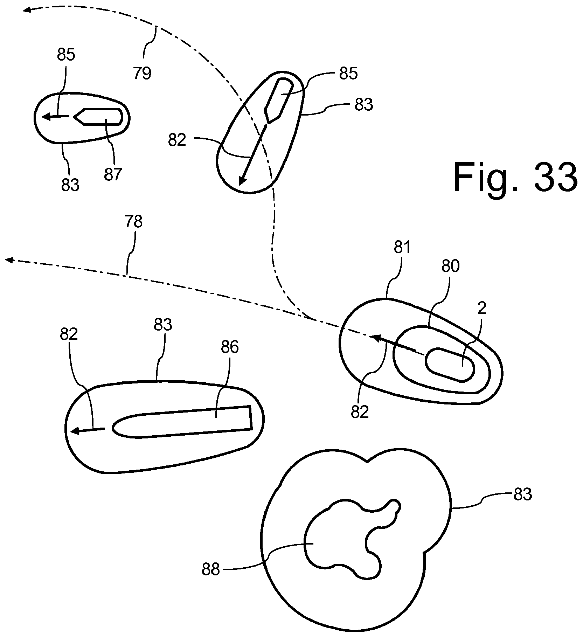

In an embodiment the boat or ship (could be any type of boat or ship and does not need to be a tugboat 2) is provided with a collision prevention system that can assist the crew to avoid collision with obstacles such as e.g. other boats or ships. In an embodiment the boat or ship is configured to issue a warning to the crew if a first risk level is exceeded, and in an embodiment the boat or ship is also configured to take evasive action if the crew does take evasive action when a second risk level that is higher than the first risk level is exceeded. The collision prevention system can also be used for an autonomously operating boat or ship, in which case the collision prevention system issues an alarm that is transmitted wirelessly to a remote recipient when a first risk level is exceeded, and the navigation prevention system takes evasive action when the second risk level is exceeded. Fig. 33 shows a scenario on a chart for illustrating the functioning of the collision prevention system.

As shown in Fig. 33, the collision prevention system (can be integral part of the electronic control unit 50) has assigned a first collision zone 80 around the boat 2 and has assigned a second collision zone 81 around the boat 2, the second collision zone 81 surrounding the first collision zone 80. The shape and size of the first collision zone 80 and the shape and size of the second collision zone 81 depend on the speed and heading of the boat or ship 2. The speed and heading of the boat or ship 2 are illustrated by vector 82.

The first collision zone 80 and the second collision zone 81 are larger in the direction of the heading of the boat or ship and will become larger at least in the direction of the heading with increasing speed of the boat or ship 2 and preferably also slightly larger in the direction traverse to the heading.

As shown in Fig. 33, the collision prevention system has detected several obstacles using the sensors on the boats 2, such as e.g. the RADAR, LIDAR and camera. In this example the detected obstacles include a pleasure boat (yacht) 85, a fishing boat 87, a cargo ship 86 and an island 88. However, it is understood that these are merely examples of possible types of obstacles, and other types of obstacles can also be detected.

The collision prevention system is configured to assign a category to each detected obstacle. Examples of categories are e.g. watercraft, fixed structures, shallow water, land and categories preferably including a plurality of categories of watercraft, including boats, ships, and said plurality of categories of boats yet even more preferably including fishing boats, tugboats, speedboats, yachts and sailing yachts and said categories of ships comprising cargo vessels, navy vessels, cruise ships and ferries. However, it is understood that this list merely provides examples and this list is not exhaustive.

Each category has associated information on e.g. the likeliness of the detected obstacle to change position, change course and/or change speed, preferably in relation to the navigation plan of the detected obstacle (if available) and using a mathematical model of the detected obstacle (if available). Each category may also have associated thereto information on the shape and size of the first collision zone and the second collision zone, preferably in relation to the detected speed and heading (if any) of the detected obstacle.

In an embodiment the navigation system is configured to track the course of a detected obstacle. In an embodiment the navigation system is configured to determine the likeliness of a detected obstacle to change course and/or speed, preferably on the basis of the category in which the obstacle has been placed.

Based on the determined category and on the speed of the detected obstacle, the navigation system determines a collision zone 83 around each detected obstacle.

In the example of Fig. 33 the boat 2 has a planned route 78. Following this route 78 the navigation system will detect after a while that the collision zone 83 of the pleasure boat 85 overlaps with the second collision zone 82 of the boat. Thereupon, the collision avoidance system transmits a warning wirelessly to the remote control center 200 and/or the remote control unit 150. Unless the boat 2 receives wireless instructions from the remote control center 200 and/or from the remote control unit 150, it will continue the planned course 78. Assuming that no such wireless instruction to change route is received, the collision avoidance system will after a while detect that the collision zone 83 of the pleasure boat 85 overlaps with the first collision zone 80 of the boat 2 and thereupon the collision avoidance system takes evasive action, preferably in accordance with COLREGs, by following a new route 79 that ensures that the boat 2 passes behind the pleasure boat 85 at a safe distance. For determining evasive action the collision avoidance system takes into account the navigational limitations of the boat or ship 2, preferably using a mathematical model (if available) of the boat or ship 2.

Simultaneously, the collision avoidance system broadcasts its change in route, preferably using VHF communication such as standardized Marine VHF communication (e.g. channel 16, which is used for urgent safety messages) and preferably in accordance with international standards, such as e.g. "IMO Standard Marine Navigational Vocabulary". In the event where both vessels have the same collision avoidance system, a standardized communication protocol will be used for the data exchange.

In an embodiment the portable control unit 150 can be used to enhance the traditional VHF communication from the assisted vessel to a conventional tugboat. The system is configured so that the pilot can issue a command to control the whole system, including the tugboats 2 and the assisted marine vessel 1 in dynamic positioning mode. The interface on the formal control unit 150 can include additional sensors to support the DP operation and enhance the position data available to the captain (of the assisted marine vessel 1) and pilot.

In an embodiment the tugboat 2 is provided with an automatic anchoring system (not shown). The automatic anchoring system can be provided a safety feature and the electronic control unit 50 can in an embodiment be configured to trigger the automatic anchoring system as a safe fall back, e.g. the failure mode supports this action.

In embodiment the tugboat 2 is fully Unmanned Surface Vessel (USV), i.e. the tugboat 2 is automated to an extent where it can be operated without a crew onboard, possibly assisted by instructions from a remote control station such as the remote control sensor 200 or the remote control unit 150. The remote control station is equipped so it is possible for a single operator to safely maneuver or supervise the tugboat 2 in all work scenarios. The operator will have a 360° view of the operating area around the tugboat 2 from the control station, preferably accompanied by 360° sound.

The communication shall provide high reliability and bandwidth for fast effective communication. In an embodiment the communication system is redundant in itself by using topology that utilizes several different communication channels. As a secondary fallback option a satellite based communication system is be provided.

While the preferred embodiments of the boat, tugboat, ship and method have been described in reference to the environment in which they were developed, they are merely illustrative of the principles of the invention. The elements of the various embodiments may be incorporated into each of the other species to obtain the benefits of those elements in combination with such other species, and the various beneficial features may be employed in embodiments alone or in combination with each other. A single controller or control unit may be formed by a combination of controllers or control units. Other embodiments and configurations may be devised without departing from the scope of the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A remote-controlled tugboat (2) for assisting a marine vessel (1) to maneuver, the tugboat (2) comprising:
a towing line (10) attached to the tugboat (2) at one end and attachable to the marine vessel (1) at another end;
a towing line force sensor; and
a control unit (50) having a transmitter-receiver configured to wirelessly receive pilot-control thrust commands transmitted from at least one of a land-based control center (200) and a mobile remote controller unit (150), said pilot-control thrust commands being for assisting the marine vessel (1) to maneuver in dependence on sensor data from the towing line force sensor,
wherein the control unit (50) is configured to command the tugboat (2) based on the pilot-control thrust commands and said tugboat (2) is configured to execute said pilot-control thrust commands to assist said marine vessel (1) with a required tension on the towing line (10).

2. A remote-controlled tugboat (2) according to claim 1, comprising at least one of:
a positioning system, the tugboat (2) being configured to transmit its position as determined by said positioning system wirelessly to said land-based control center (200);
a navigation system configured to sail said tugboat (2) from a present position to a target position received from said land-based control center (200);
a controller configured to berth said tugboat (2) autonomously, said controller being configured to accurately react to a near environment of the tugboat (2) to avoid overloading of a berth or hull (23) of the tugboat (2); and
a crane or robot arm, and a controller for controlling said crane or robot arm, said controller being configured to wirelessly receive instructions from said land-based control center (200) for operating said crane or robot arm.

3. A remote-controlled tugboat (2) according to claim 1 or 2, wherein the remote-controlled tugboat (2) is configured to follow the marine vessel (1) at a substantially constant distance, preferably with a fixed relative position to the marine vessel (1), upon receipt of instructions from said mobile remote controller unit (150) or from said land-based control center (200).

4. A remote-controlled tugboat (2) according to any preceding claim, wherein the remote-controlled tugboat (2) is configured to execute said pilot-control thrust commands as vectors in relation to a hull (3) of the marine vessel (1).

5. A land-based control center (200) for controlling at least one tugboat (2), the tugboat comprising: a towing line (10) attached to the tugboat (2) at one end and attachable to a marine vessel (1) at another end; and a towing line force sensor, the tugboat (2) being suitable for assisting the marine vessel (1) to maneuver, said land-based control center (200) comprising:
a transmitter-receiver configured for wirelessly transmitting pilot-control thrust commands to said at least one tugboat (2), for assisting the marine vessel (1) to maneuver, in dependence on sensor data from the towing line force sensor, the pilot-control thrust commands being received in a control unit (50) of the at least one tugboat (2), the pilot-control thrust commands being configured to wirelessly control said tugboat (2) with a required tension in the towing line (10), and said pilot-control thrust commands comprising a vector in relation to a hull (3) of the marine vessel (1).

6. A land-based control center (200) according to claim 5, wherein the vector determines a magnitude of the thrust to be applied to the hull (3) of the marine vessel (1) and a direction of the thrust to be applied relative to the hull (3) of the marine vessel (1).

7. A system for assisting a marine vessel (1) to maneuver, the system comprising:
a remote-controlled tugboat (2) according to any one of claims 1 to 4; and
a land-based control center (200) according to claim 5 or 6;
wherein the transmitter-receiver of the control unit (50) of the remote-controlled tugboat (2) is configured to wirelessly receive pilot-control thrust commands transmitted from the land-based control center (200).

8. A system according to claim 7, wherein the land-based control center (200) is configured to wirelessly remote-control the tugboat (2) to sail to a particular position for assisting the marine vessel (1) to maneuver.

9. A system according to claim 7 or 8,
wherein the tugboat (2) is provided with:
an optical sensor arrangement or digital camera arrangement; and
a transmitter for wirelessly transmitting a signal of said optical sensor arrangement or digital camera arrangement to the land-based control center (200);
wherein the land-based control center (200) is provided with:
a receiver for receiving the signal; and
display screens for displaying the signal, preferably in real-time and even more preferably in real-time and on a 360° circular array of display screens, to a human operator.

10. A system according to any one of claims 7 to 9,
wherein the tugboat (2) is provided with:
an acoustic sensor arrangement, preferably a directional acoustic sensor arrangement with a 360° field of hearing in the horizontal plane; and
a transmitter for wirelessly transmitting the signal of said acoustic sensor arrangement to the land-based control center (200);
wherein the land-based control center (200) is provided with:
a receiver for receiving the signal from said acoustic sensor arrangement; and
transducers for reproducing the signal, preferably real-time and even more preferably real-time and spatially, at the land-based control center (200).

11. A system according to any one of claims 7 to 10, further comprising the mobile remote controller unit (150) for remotely controlling the remote-controlled tugboat (2),
wherein the transmitter-receiver of the controller (50) of the remote-controlled tugboat (2) is configured to wirelessly receive pilot-control thrust commands transmitted from the mobile remote controller unit (150).

12. A method for controlling at least one tugboat (2) for assisting a marine vessel (1) to maneuver, from a remotely located control center (200), said method comprising:
providing at least one tugboat (2) comprising:
a towing line (10) attached to the tugboat (2) at one end and attachable to the marine vessel (1) at another end; and
a towing line force sensor;
providing a land-based control center (200) located remotely from the at least one tugboat (2);
sending instructions wirelessly from said land-based control center (200) to a given tugboat (2) of said at least one tugboat (2) for said given tugboat (2) to sail to a particular position for assisting the marine vessel (1) to maneuver;
receiving said instructions wirelessly on said given tugboat (2);
said given tugboat (2) sailing to said particular position;
sending thrust commands, from said land-based control center (200) or from a mobile remote controller unit (150) in a vicinity of said particular position, to said given tug boat (2) after the given tug boat (2) has arrived at said particular position and in dependence on sensor data from the towing line force sensor; and
said given tug boat (2) carrying out said thrust commands for assisting said marine vessel (1), with a required tension in the towing line, upon receipt of said thrust commands.

13. A method according to claim 12, the thrust commands comprising a vector in relation to a hull (3) of the marine vessel (1).

14. A method according to claim 12 or 13, comprising operating, by a human pilot, said mobile remote controller unit (150) to send the thrust commands therefrom.

15. A method according to any one of claims 12 to 14, wherein the thrust commands are sent from the mobile remote controller unit (150), and
wherein control of the given tugboat (2) passes from said land-based control center (200) to said mobile remote controller unit (150) when said given tugboat (2) assists said marine vessel (1) to maneuver.

## Patentansprüche

1. Ferngesteuertes Schleppschiff (2) zum Unterstützen eines Wasserfahrzeugs (1) beim Manövrieren, wobei das Schleppschiff (2) Folgendes umfasst:
eine Schleppleine (10), die an einem Ende an dem Schleppschiff (2) befestigt ist und sich am anderen Ende an dem Wasserfahrzeug (1) befestigen lässt;
einen Schleppleinen-Kraftsensor; und
eine Steuereinheit (50) mit einem Sender-Empfänger, der dazu konfiguriert ist, Vorsteuerungsschubbefehle drahtlos zu empfangen, die von mindestens einem von einer landgestützten Steuerzentrale (200) und einer mobilen Fernsteuereinheit (150) übertragen werden, wobei die Vorsteuerungsschubbefehle zum Unterstützen des Wasserfahrzeugs (1) beim Manövrieren in Abhängigkeit von Sensordaten von dem Schleppleine-Kraftsensor dienen,
wobei die Steuereinheit (50) dazu konfiguriert ist, das Schleppschiff (2) basierend auf den Vorsteuerungsschubbefehlen zu befehligen, und wobei das Schleppschiff (2) dazu konfiguriert ist, die Vorsteuerungsschubbefehle auszuführen, um das Wasserfahrzeug (1) mit einer erforderlichen Spannung an der Schleppleine (10) zu unterstützen.

2. Ferngesteuertes Schleppschiff (2) nach Anspruch 1, mindestens eines von Folgendem umfassend:
ein Positionierungssystem, wobei das Schleppschiff (2) dazu konfiguriert ist, seine durch das Positionierungssystem bestimmte Position drahtlos an die landgestützte Steuerzentrale (200) zu übertragen;
ein Navigationssystem, das dazu konfiguriert ist, das Schleppschiff (2) aus einer aktuellen Position in eine Zielposition zu schippern, die von der landgestützten Steuerzentrale (200) empfangen wurde;
eine Steuerung, die dazu konfiguriert ist, das Schleppschiff (2) autonom anzudocken, wobei die Steuerung dazu konfiguriert ist,
exakt auf eine nahe Umgebung des Schleppschiffs (2) zu reagieren, um eine Überladung eines Ankerplatzes oder Rumpfes (23) des Schleppschiffs (2) zu vermeiden; und
einen Kran oder Roboterarm und eine Steuerung zum Steuern des Krans oder Roboterarms, wobei die Steuerung dazu konfiguriert ist, drahtlose Anweisungen von der landgestützten Steuerzentrale (200) zum Betreiben des Krans oder Roboterarms zu empfangen.

3. Ferngesteuertes Schleppschiff (2) nach Anspruch 1 oder 2, wobei das ferngesteuerte Schleppschiff (2) dazu konfiguriert ist, dem Wasserfahrzeug (1) in einem im Wesentlichen konstanten Abstand zu folgen, vorzugsweise mit einer festen relativen Position zum Wasserfahrzeug (1), nachdem es die Anweisungen von der mobilen Fernsteuerungseinheit (150) oder von der landgestützten Steuerzentrale (200) empfangen hat.

4. Ferngesteuertes Schleppschiff (2) nach einem der vorangehenden Ansprüche, wobei das ferngesteuerte Schleppschiff (2) dazu konfiguriert ist, die Vorsteuerungsschubbefehle als Vektoren in Bezug auf einen Rumpf (3) des Wasserfahrzeugs (1) auszuführen.

5. Landgestützte Steuerzentrale (200) zum Steuern von mindestens einem Schleppschiff (2), wobei das Schleppschiff Folgendes umfasst: eine Schleppleine (10), die an einem Ende an dem Schleppschiff (2) befestigt ist und sich am anderen Ende an einem Wasserfahrzeug (1) befestigen lässt; und einen Schleppleinen-Kraftsensor, wobei das Schleppschiff (2) dazu geeignet ist, das Wasserfahrzeug (1) beim Manövrieren zu unterstützen; wobei die landgestützte Steuerzentrale (200) Folgendes umfasst:
einen Sender-Empfänger, der dazu konfiguriert ist, Vorsteuerungsschubbefehle drahtlos an das mindestens eine Schleppschiff (2) zu übertragen, um das Wasserfahrzeug (1) in Abhängigkeit von Sensordaten von dem Schleppleine-Kraftsensor beim Manövrieren zu unterstützen, wobei die Vorsteuerungsschubbefehle in einer Steuereinheit (50) des mindestens einen Schleppschiffs (2) empfangen werden, wobei die Vorsteuerungsschubbefehle dazu konfiguriert sind, das Schleppschiff (2) drahtlos mit einer erforderlichen Spannung an der Schleppleine (10) zu steuern, und wobei die Vorsteuerungsschubbefehle einen Vektor in Bezug auf einen Rumpf (3) des Wasserfahrzeugs (1) umfassen.

6. Landgestützte Steuerzentrale (200) nach Anspruch 5, wobei der Vektor ein Ausmaß des Schubs, der auf den Rumpf (3) des Wasserfahrzeugs (1) aufzubringen ist, und eine Richtung des Schubs, der relativ zum Rumpf (3) des Wasserfahrzeugs (1) aufzubringen ist, bestimmt.

7. System zum Unterstützen eines Wasserfahrzeugs (1) beim Manövrieren, wobei das System Folgendes umfasst:
ein ferngesteuertes Schleppschiff (2) nach einem der Ansprüche 1 bis 4; und
eine landgestützte Steuerzentrale (200) nach Anspruch 5 oder 6;
wobei der Sender-Empfänger der Steuereinheit (50) des ferngesteuerten Schleppschiffs (2) dazu konfiguriert ist, Vorsteuerungsschubbefehle drahtlos zu empfangen, die von der landgestützten Steuerzentrale (200) übertragen werden.

8. System nach Anspruch 7, wobei die landgestützte Steuerzentrale (200) dazu konfiguriert ist, das Schleppschiff (2) drahtlos fernzusteuern, um es in eine bestimmte Position zu schippern, um das Wasserfahrzeug (1) beim Manövrieren zu unterstützen.

9. System nach Anspruch 7 oder 8,
wobei das Schleppschiff (2) mit Folgendem bereitgestellt ist:
einer optischen Sensoranordnung oder einer digitalen Kameraanordnung; und einem Sender zum drahtlosen Übertragen eines Signals von der optischen Sensoranordnung oder der digitalen Kameraanordnung an die landgestützte Steuerzentrale (200); wobei die landgestützte Steuerzentrale (200) mit Folgendem bereitgestellt ist:
einem Empfänger zum Empfangen des Signals; und Anzeigebildschirmen zum Anzeigen des Signals, vorzugsweise in Echtzeit und noch bevorzugter in Echtzeit und auf einer kreisförmigen 360-Grad-Anordnung von Anzeigebildschirmen für einen menschlichen Bediener.

10. System nach einem der Ansprüche 7 bis 9,
wobei das Schleppschiff (2) mit Folgendem bereitgestellt ist:
einer akustischen Sensoranordnung, vorzugsweise einer gerichteten akustischen Sensoranordnung mit einem 360-Grad-Hörfeld auf der horizontalen Ebene; und
einem Sender zum drahtlosen Übertragen des Signals der akustischen Sensoranordnung an die landgestützte Steuerzentrale (200) ;
wobei die die landgestützte Steuerzentrale (200) mit Folgendem bereitgestellt ist:
einem Empfänger zum Empfangen des Signals von der akustischen Sensoranordnung; und
Wandler zum Reproduzieren des Signals, vorzugsweise in Echtzeit und noch bevorzugter in Echtzeit und räumlich, an die landgestützten Steuerzentrale (200).

11. System nach einem der Ansprüche 7 bis 10, ferner umfassend die mobile Fernsteuereinheit (150) zum Fernsteuern des ferngesteuerten Schleppschiffs (2),
wobei der Sender-Empfänger der Steuerung (50) des ferngesteuerten Schleppschiffs (2) dazu konfiguriert ist, Vorsteuerungsschubbefehle drahtlos zu empfangen, die von der mobilen Fernsteuereinheit (150) übertragen werden.

12. Verfahren zum Steuern von mindestens einem Schleppschiff (2) von einer entfernten Steuerzentrale (200) aus zum Unterstützen eines Wasserfahrzeugs (1) beim Manövrieren, wobei das Verfahren Folgendes umfasst:
Bereitstellen von mindestens einem Schleppschiff (2), Folgendes umfassend:
eine Schleppleine (10), die an einem Ende an dem Schleppschiff (2) befestigt ist und sich am anderen Ende an dem Wasserfahrzeug (1) befestigen lässt; und
einen Schleppleinen-Kraftsensor;
Bereitstellen einer landgestützten Steuerzentrale (200), die sich von dem mindestens einen Schleppschiff (2) entfernt befindet;
drahtloses Senden von Anweisungen von der landgestützten Steuerzentrale (200) an ein gegebenes Schleppschiff (2) von dem mindestens einen Schleppschiff (2) für das gegebene Schleppschiff (2), um zu einer bestimmten Position zum Unterstützen des Wasserfahrzeugs (1) beim Manövrieren zu schippern;
drahtloses Empfangen der Anweisungen auf dem gegebenen Schleppschiff (2);
Schippern des gegebenen Schleppschiffs (2) zu der bestimmten Position;
Senden von Vorsteuerungsschubbefehlen von der landgestützten Steuerzentrale (200) oder von einer mobilen Fernsteuereinheit (150) in der Nähe der bestimmten Position an das gegebene Schleppschiff (2), nachdem das gegebene Schleppschiff (2) in der bestimmten Position angekommen ist und in Abhängigkeit von Sensordaten von dem Schleppleine-Kraftsensor; und
Durchführen der Vorsteuerungsschubbefehle durch das gegebene Schleppschiff (2) zum Unterstützen des Wasserfahrzeugs (1) beim Manövrieren mit einer erforderlichen Spannung an der Schleppleine nach Empfang der Vorsteuerungsschubbefehle.

13. Verfahren nach Anspruch 12, wobei die Vorsteuerungsschubbefehle einen Vektor in Bezug auf einen Rumpf (3) des Wasserfahrzeugs (1) umfassen.

14. Verfahren nach Anspruch 12 oder 13, umfassend das Betreiben, durch einen menschlichen Piloten, der mobilen Fernsteuereinheit (150), um die Vorsteuerungsschubbefehle von dieser aus zu senden.

15. Verfahren nach einem der Ansprüche 12 bis 14, wobei die Vorsteuerungsschubbefehle von der mobilen Fernsteuereinheit (150) gesendet werden, und
wobei die Steuerung des gegebenen Schleppschiffs (2) von der landgestützten Steuerzentrale (200) zu der mobilen Fernsteuerung (150) wechselt, wenn das gegebene Schleppschiff (2) das Wasserfahrzeug (1) beim Manövrieren unterstütz.

## Revendications

1. Remorqueur télécommandé (2) pour aider un navire (1) à manœuvrer, le remorqueur (2) comprenant :
un câble de remorquage (10) attaché au remorqueur (2) à une extrémité et attachable au navire (1) à une autre extrémité ;
un capteur de force de câble de remorquage ; et
une unité de commande (50) présentant un émetteur-récepteur configuré pour recevoir sans fil des commandes de poussée de commande pilote transmises par au moins un d'un centre de commande terrestre (200) et d'une unité de dispositif de commande distant mobile (150), lesdites commandes de poussée de commande pilote étant destinées à aider le navire (1) à manœuvrer selon des données du capteur de force de câble de remorquage,
dans lequel l'unité de commande (50) est configurée pour commander le remorqueur (2) sur la base des commandes de poussée de commande pilote et ledit remorqueur (2) est configuré pour exécuter lesdites commandes de poussée de commande pilote pour aider ledit navire (1) avec une tension requise sur le câble de remorquage (10).

2. Remorqueur télécommandé (2) selon la revendication 1, comprenant au moins un de :
un système de positionnement, le remorqueur (2) étant configuré pour transmettre sa position comme elle est déterminée par ledit système de positionnement sans fil audit centre de commande terrestre (200) ;
un système de navigation configuré pour faire naviguer ledit remorqueur (2) d'une position présente à une position cible reçue par ledit centre de commande terrestre (200) ;
un dispositif de commande configuré pour amarrer ledit remorqueur (2) de manière autonome, ledit dispositif de commande étant configuré pour réagir de manière précise à un environnement proche du remorqueur (2) pour éviter la surcharge d'une couchette ou coque (23) du remorqueur (2) ; et
une grue ou un bras de robot, et un dispositif de commande pour la commande de ladite grue ou dudit bras de robot, ledit dispositif de commande étant configuré pour recevoir sans fil des instructions dudit centre de commande terrestre (200) pour faire fonctionner ladite grue ou ledit bras de robot.

3. Remorqueur télécommandé (2) selon la revendication 1 ou 2, dans lequel le remorqueur télécommandé (2) est configuré pour suivre le navire (1) à une distance sensiblement constante, de préférence avec une position relative fixée au navire (1), suite à la réception d'instructions de ladite unité de dispositif de commande distant mobile (150) ou dudit centre de commande terrestre (200).

4. Remorqueur télécommandé (2) selon l'une quelconque des revendications précédentes, dans lequel le remorqueur télécommandé (2) est configuré pour exécuter lesdites commandes de poussée de commande pilote comme vecteurs en relation avec une coque (3) du navire (1).

5. Centre de commande terrestre (200) pour la commande d'au moins un remorqueur (2), le remorqueur comprenant : une câble de remorquage (10) attaché au remorqueur (2) à une extrémité et attachable à un navire (1) à l'autre extrémité ; et un capteur de force de câble de remorquage, le remorqueur (2) étant adapté pour aider le navire (1) à manœuvrer, ledit centre de commande terrestre (200) comprenant :
un émetteur-récepteur configuré pour transmettre sans fil des commandes de poussée de commande pilote audit au moins un remorqueur (2), pour aider le navire (1) à manœuvrer, selon les données du capteur de force de câble de remorquage, les commandes de poussée de commande pilote étant reçues dans une unité de commande (50) de l'au moins un remorqueur (2), les commandes de poussée de commande pilote étant configurées pour commander sans fil ledit remorqueur (2) avec une tension requise dans le câble de remorquage (10), et lesdites commandes de poussée de commande pilote comprenant un vecteur en relation avec une coque (3) du navire (1).

6. Centre de commande terrestre (200) selon la revendication 5, dans lequel le vecteur détermine une grandeur de la poussée à appliquer à la coque (3) du navire (1) et une direction de la poussée à appliquer par rapport à la coque (3) du navire (1).

7. Système pour aider un navire (1) à manœuvrer, le système comprenant :
un remorqueur télécommandé (2) selon l'une quelconque des revendications 1 à 4 ; et
un centre de commande basé sur terre (200) selon la revendication 5 ou 6 ;
dans lequel l'émetteur-récepteur de l'unité de commande (50) du remorqueur télécommandé (2) est configuré pour recevoir sans fil des commandes de poussée de commande pilote transmises par le centre de commande terrestre (200).

8. Système selon la revendication 7, dans lequel le centre de commande terrestre (200) est configuré pour télécommander sans fil le remorqueur (2) pour qu'il navigue jusqu'à une position particulière pour aider le navire (1) à manœuvrer.

9. Système selon la revendication 7 ou 8,
dans lequel le remorqueur (2) est doté de :
un agencement de capteur optique ou agencement de caméra numérique ; et
un transmetteur pour la transmission sans fil d'un signal dudit agencement de capteur optique ou agencement de caméra numérique au centre de commande terrestre (200) ;dans lequel le centre de commande terrestre (200) est doté :
d'un récepteur pour la réception du signal ; et
d'écrans d'affichage pour afficher le signal, de préférence en temps réel et de manière encore plus préférée en temps réel et sur un agencement d'écrans d'affichage circulaire à 360°, pour un opérateur humain.

10. Système selon l'une quelconque des revendications 7 à 9, dans lequel le remorqueur (2) est doté de :
un agencement de capteur acoustique, de préférence un agencement de capteur acoustique directionnel avec un champ d'audition à 360° dans le plan horizontal ; et
un transmetteur pour la transmission sans fil du signal dudit agencement de capteur acoustique au centre de commande terrestre (200) ;
dans lequel le centre de commande terrestre (200) est doté de :
un récepteur pour la réception du signal dudit agencement de capteur acoustique ; et
de transducteurs pour la reproduction du signal, de préférence en temps réel, et de manière encore plus préférée en temps réel et dans l'espace, au niveau du centre de commande terrestre (200).

11. Système selon l'une quelconque des revendications 7 à 10, comprenant en outre l'unité de dispositif de commande distant mobile (150) pour la télécommande du remorqueur télécommandé (2),
dans lequel l'émetteur-récepteur du dispositif de commande (50) du remorqueur télécommandé (2) est configuré pour recevoir sans fil des commandes de poussée de commande pilote transmises par l'unité de dispositif de commande distant mobile (150).

12. Procédé de commande d'au moins un remorqueur (2) pour aider un navire (1) à manœuvrer, depuis un centre de commande situé à distance (200), ledit procédé comprenant :
la fourniture d'au moins un remorqueur (2) comprenant :
un câble de remorquage (10) attaché au remorqueur (2) à une extrémité et attachable au navire (1) à l'autre extrémité ; et
un capteur de force de câble de remorquage ;
la fourniture d'un centre de commande terrestre (200) situé à distance de l'au moins un remorqueur (2) ;
l'envoi d'instructions sans fil dudit centre de commande terrestre (200) à un remorqueur donné (2) dudit au moins un remorqueur (2) pour que ledit remorqueur donné (2) navigue jusque dans une position particulière pour aider le navire (1) à manœuvrer ;
la réception desdites instructions sans fil sur ledit remorqueur donné (2) ;
ledit remorqueur donné (2) naviguant jusque dans ladite position particulière ;
l'envoi de commandes de poussée, dudit centre de commande terrestre (200) ou d'une unité de dispositif de commande distant mobile (150) à une proximité de ladite position particulière, audit remorqueur donné (2) après l'arrivée du remorqueur donné (2) dans ladite position particulière et selon les données du capteur de force de câble de remorquage ; et
ledit remorqueur donné (2) réalisant lesdites commandes de poussée pour aider ledit navire (1), avec une tension requise dans le câble de remorquage, suite à la réception desdites commandes de poussée.

13. Procédé selon la revendication 12, les commandes de poussée comprenant un vecteur en relation avec une coque (3) du navire (1).

14. Procédé selon la revendication 12 ou 13, comprenant le fonctionnement, par un pilote humain, de ladite unité de dispositif de commande distant mobile (150) pour envoyer les commandes de poussée de celle-ci.

15. Procédé selon l'une quelconque des revendications 12 à 14, dans lequel les commandes de poussée sont envoyées par l'unité de dispositif de commande distant mobile (150), et
dans lequel la commande du remorqueur donné (2) passe dudit centre de commande terrestre (200) à ladite unité de dispositif de commande distant mobile (150) lorsque ledit remorqueur donné (2) aide ledit navire (1) à manœuvrer.
